(19) Europäisches Patentamt
European Patent Office
Office européen des brevets

(11) EP 4 569 010 B1

(12) # EUROPEAN PATENT SPECIFICATION

(45) Date of publication and mention of the grant of the patent:
**03.12.2025 Bulletin 2025/49**

(21) Application number: **24782910.4**

(22) Date of filing: **07.10.2024**

(51) International Patent Classification (IPC):
***C08F 265/10*** (2006.01) ***C08F 220/56*** (2006.01)
***C08F 220/34*** (2006.01) ***C08F 285/00*** (2006.01)
***D21H 17/18*** (2006.01) ***D21H 17/37*** (2006.01)
***D21H 17/00*** (2006.01) ***C08F 271/00*** (2006.01)
***C08F 226/04*** (2006.01)

(52) Cooperative Patent Classification (CPC):
(C-Sets available)
**C08F 220/56; C08F 226/04; C08F 265/10; C08F 271/00; C08F 285/00; D21H 17/18; D21H 17/37; D21H 17/42; D21H 17/44; D21H 17/66; D21H 21/18; D21H 21/20** (Cont.)

(86) International application number:
**PCT/EP2024/078109**

(87) International publication number:
**WO 2025/078299 (17.04.2025 Gazette 2025/16)**

(54) **METHOD FOR MANUFACTURING A SHEET OF PAPER**
VERFAHREN ZUR HERSTELLUNG EINES PAPIERBLATTES
MÉTHODE DE FABRICATION D'UNE FEUILLE DE PAPIER

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **10.10.2023 FR 2310824**

(43) Date of publication of application:
**18.06.2025 Bulletin 2025/25**

(73) Proprietor: **SNF Group**
**42160 Andrézieux-Bouthéon (FR)**

(72) Inventors:
- **FAUCHER, Gatien**
**42160 ANDREZIEUX-BOUTHEON (FR)**
- **FOUGEROUSE, Damien**
**42160 ANDREZIEUX-BOUTHEON (FR)**

(74) Representative: **Ipsilon**
**Le Contemporain**
**50 Chemin de la Bruyère**
**69574 Dardilly Cedex (FR)**

(56) References cited:
**EP-B1- 3 464 721** **FR-A1- 3 048 436**
**US-A1- 2005 272 889**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 8/28, C08F 220/56;**
**C08F 8/28, C08F 226/04;**
**C08F 8/28, C08F 271/00;**
**C08F 220/56, C08F 220/34, C08F 222/385, C08F 228/02;**
**C08F 220/56, C08F 226/04, C08F 222/385; C08F 226/04, C08F 220/56, C08F 222/385;**
**C08F 226/04, C08F 220/56, C08F 228/02, C08F 220/54;**
**C08F 265/10, C08F 220/56, C08F 222/02, C08F 228/02;**
**C08F 271/00, C08F 220/56, C08F 226/04, C08F 220/54, C08F 228/02;**
**C08F 285/00, C08F 220/56, C08F 222/02, C08F 228/02**

## Description

### Technical Field of the Invention

This invention relates to a method of manufacturing a sheet of paper or cardboard comprising the addition of a mixture M and a water-soluble amphoteric polymer to a fibrous suspension.

### Prior Art

The paper industry is constantly seeking to improve its paper, cardboard, or like manufacturing processes, particularly with regard to cost reduction, yield, productivity, and even the properties of the final product.

This is especially the case for the packaging industry, which is looking for paper, cardboard or similar materials with better dry-strength performance, not least to meet current ecological challenges to replace plastic packaging.

The dry strength of paper is by definition the dry strength of the sheet, cardboard, or similar in the dry state. Mechanical strength values traditionally provide a measure of dry strength. These include resistance to bursting, tensile strength, compression, and delamination, etc.

The use of water-soluble cationic polymers to improve paper's resistance characteristics is well known. By their nature, these polymers may attach directly to the anionic cellulose, thus improving the dry resistance of the sheet.

The most commonly used cationic polymers are compounds such as cationic starch, polyamide epichlorohydrin (PAE), polyamide amine epichlorohydrin (PAAE), cationic polyacrylamide optionally glyoxalated, polyvinylamine, polyethyleneimine (PEI), polyamine epichlorohydrin (PA) resins.

It is also known to use a combination of cationic and anionic polymers, as in FR 2880901 B1, to improve the dry strength performance of the paper sheet.

EP 3 464 721 A1 describes a method of enhancing paper strength properties comprising treating a paper sheet precursor with a polyaluminum salt, and a strengthening agent, wherein the strengthening agent comprises a dialdehyde-modified polyacrylamide copolymer and a polyacrylamide copolymer.

FR 3 048 436 A1 relates to a process for manufacturing a sheet of paper and/or board from a fibrous suspension, comprising the addition to the fibrous suspension of a water-soluble organic cationic polymer P1 having a cationicity greater than 2 $meq.g^{-1}$ and a water-soluble amphoteric polymer P2 as retention aids.

US 2005/0272889 A1 discloses a novel (meth)acrylamide polymer to be used in a papermaking process.

FR2206322 relates to a novel water-soluble dialdehyde polymer.

The Applicant has discovered, surprisingly, that the combination between (1) a mixture comprising an aluminum salt and a water-soluble aldehyde polymer (2) in a precise ratio, and (3) a water-soluble amphoteric polymer obtained according to a particular method, added (4) in sequence to a fibrous cellulose suspension made it possible to improve the physical properties of the paper or cardboard, whatever the source of the cellulose fibers used.

The method according to the invention is part of a principle of environmental awareness and the impact of industries and humans on the planet. The synergistic effect of the combination resulting from the invention makes it possible to reduce the quantity of polymer necessary to obtain good mechanical performance of the final product, in particular dry strength, implying a reduction in greenhouse gas emissions such as carbon dioxide associated with the manufacture and use of synthetic polymers.

### Disclosure of the Invention

This invention, as defined in the appended claims, relates to a method of manufacturing a sheet of paper (or cardboard) comprising the addition, in sequence, to a fibrous suspension of at least:

1) a mixture M comprising at least:

  a) an aluminum salt;
  b) a water-soluble cationic aldehyde polymer;

the aluminum salt and the water-soluble cationic aldehyde polymer having a weight ratio of between 60:40 and 20:80;
2) a water-soluble amphoteric polymer PA comprising at least:

  a) a hydrophilic cationic monomer $A_{PHA}$;
  b) a hydrophilic anionic monomer $B_{PHA}$;
  c) a hydrophilic non-ionic monomer $C_{PHA}$;
  d) a structuring system comprising at least:

(i) a compound I, different from the hydrophilic anionic monomer $B_{PHA}$, selected from: allylsulfonic acid, methallylsulfonic acid, allyl disulfonic acid, methallyl disulfonic acid, their salts and mixtures;
(ii) a compound II of formula (2):

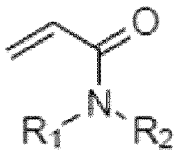

Formula (2)

$R_1$ and $R_2$ being, independently of each other, a hydrogen atom, a methyl group, an ethyl group, an isopropyl group or a $CH_2$-OH group;
$R_1$ and $R_2$ not being both a hydrogen ($R_1 \neq H$ when $R_2=H$; $R_2 \neq H$ when R1=H);
the water-soluble amphoteric polymer PA being obtained according to the following steps:

A) formation of a solution (S1) comprising at least a first fraction (F1) comprising (1) at least one monomer selected from the monomers $A_{PHA}$, $B_{PHA}$ and $C_{PHA}$ and/or (2) at least one compound selected from compounds I and II;
B) polymerization 1 (PO1) of fraction F1 to form a solution of a first prepolymer PP1;
C) addition, to the solution comprising PP1, of a second fraction (F2) comprising (1) at least one monomer selected from the monomers $A_{PHA}$, $B_{PHA}$ and $C_{PHA}$ and/or (2) at least one compound selected from compounds I and II;
D) polymerization 2 (PO2) of fraction F2 on PP1 to form a solution of a second prepolymer PP2;
E) addition, to the solution comprising PP2, of a third fraction (F3) comprising (1) at least one monomer selected from the monomers $A_{PHA}$, $B_{PHA}$, and $C_{PHA}$ and/or (2) at least one compound selected from compounds I and II;
F) polymerization 3 (PO3) of fraction F3 on PP2 to form a solution comprising water-soluble amphoteric polymer PA;

at least one of the fractions F1, F2 or F3 comprising at least one monomer $A_{PHA}$,
at least one of the fractions F1, F2 or F3 comprising at least one monomer $B_{PHA}$,
at least one of the fractions F1, F2 or F3 comprising at least one monomer $C_{PHA}$,
at least one of the fractions F1, F2 or F3 comprising at least one compound I and
at least one of the fractions F1, F2 or F3 comprising at least one compound II.

**Description of the Invention**

By "polymer" we mean a copolymer prepared from at least two different monomers, optionally comprising more than two different monomers.

The term "paper" also includes cardboard.

By "hydrophilic monomer", we designate a monomer which has an octanol/water partition coefficient, $K_{ow}$, less than or equal to 1, in which the partition coefficient $K_{ow}$ is determined at 25 °C in an octanol/water mixture having a volume ratio of 1/1, at a pH between 6 and 8.

By "hydrophilic monomer", we mean a monomer which has an octanol/water partition coefficient, $K_{ow}$, less than or equal to 1, in which the partition coefficient $K_{ow}$ is determined at 25°C in an octanol/water mixture having a volume ratio of 1/1, at a pH between 6 and 8.

The octanol/water partition coefficient, $K_{ow}$, represents the ratio of concentrations (g/L) of a monomer between the octanol phase and the aqueous phase. It is defined as follows:

$$K_{ow} = \frac{[\text{monomer}]_{\text{octanol}}}{[\text{monomer}]_{\text{water}}}$$

By "water-soluble polymer" we mean a polymer that produces an aqueous solution with no insoluble particles when dissolved in deionized water at 25°C with stirring and at a concentration of log.1$^{-1}$.

Throughout the description, the Brookfield viscosities are measured with a Brookfield viscometer, at 25°C in

aqueous solution, with an LV module.

In this description, it is considered that those skilled in the art are able to determine the module and the speed of the Brookfield viscometer adapted according to the range of viscosity to be measured. This type of measurement is in fact part of the general knowledge of those skilled in the art.

According to the invention, we designate "X and/or Y", to mean "X", or "Y", or "X and Y".

Also, part of the invention are all the possible combinations between the various embodiments disclosed, whether these are preferred embodiments or given by way of example. Furthermore, when ranges of values are indicated, the limits are part of these ranges. The disclosure also includes all combinations between the limits of these value ranges. For example, the value ranges "1-20, preferably 5-15", imply the disclosure of the ranges "1-5", "1-15", "5-20", and "15-20" and the values 1, 5, 15, and 20

**Method of manufacturing a sheet of paper or cardboard**

This invention relates to a method of manufacturing a sheet of paper or cardboard comprising the addition, in sequence, to a fibrous suspension of at least:

1) a mixture M comprising at least:

- a) an aluminum salt;
- b) a water-soluble cationic aldehyde polymer;

the aluminum salt and the water-soluble cationic polymer having a weight ratio of between 60:40 and 20:80;

2) a water-soluble amphoteric polymer PA comprising at least:

- a) a hydrophilic cationic monomer $A_{PHA}$ ;
- b) a hydrophilic anionic monomer $B_{PHA}$;
- c) a hydrophilic non-ionic monomer $C_{PHA}$;
- d) a structuring system comprising at least:

(i) a compound I, different from the hydrophilic anionic monomer(s) $B_{PHA}$, selected from: allylsulfonic acid, methallylsulfonic acid, allyl disulfonic acid, methallyl disulfonic acid, their salts and mixtures;

(ii) a compound II of formula (2):

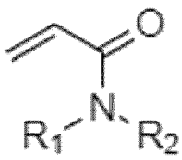

Formula (2)

$R_1$ and $R_2$ being, independently of each other, a hydrogen atom, a methyl group, an ethyl group, an isopropyl group or a $CH_2$-OH group;

$R_1$ and $R_2$ not being both a hydrogen ($R_1 \neq H$ when $R_2=H$; $R_2 \neq H$ when R1=H);

the water-soluble amphoteric polymer PA being obtained according to the following steps:

A) formation of a solution (S1) comprising at least a first fraction (F1) comprising (1) at least one monomer selected from the monomers $A_{PHA}$, $B_{PHA}$ and $C_{PHA}$ and/or (2) at least one compound selected from compounds I and II;

B) polymerization 1 (PO1) of fraction F1 to form a solution of a first prepolymer PP1;

C) addition, to the solution comprising PP1, of a second fraction (F2) comprising (1) at least one monomer selected from the monomers $A_{PHA}$, $B_{PHA}$ and $C_{PHA}$ and/or (2) at least one compound selected from compounds I and II;

D) polymerization 2 (PO2) of fraction F2 on PP1 to form a solution of a second prepolymer PP2;

E) addition, to the solution comprising PP2, of a third fraction (F3) comprising (1) at least one monomer selected from the monomers $A_{PHA}$, $B_{PHA}$, and $C_{PHA}$ and/or (2) at least one compound selected from compounds I and II;

F) polymerization 3 (PO3) of fraction F3 on PP2 to form a solution comprising the water-soluble amphoteric polymer PA;

and at least one of the fractions F1, F2 or F3 comprising at least one monomer $A_{PHA}$,
at least one of the fractions F1, F2 or F3 comprising at least one monomer $B_{PHA}$,
at least one of the fractions F1, F2 or F3 comprising at least one monomer $C_{PHA}$,
at least one of the fractions F1, F2 or F3 comprising at least one compound I and
at least one of the fractions F1, F2 or F3 comprising at least one compound II.

The different stages of the method of manufacturing paper, cardboard or the like are known and conform to the techniques requiring the knowledge of those skilled in the art, the latter if necessary may refer to the document: Handbook for Pulp & Paper Technologists, 4th Edition, G.A. Smook.
The fibrous suspension is typically a suspension of cellulose fibers in water.
In particular, it may be the thick stock or the diluted stock in a papermaking process.
According to the invention, the mixture M and the water-soluble amphoteric polymer PA are added in the papermaking process, before formation of the sheet of paper, cardboard, or the like. Thus, bringing the cellulosic material into contact with the mixture M and the water-soluble amphoteric polymer PA may be carried out in different ways and in particular according to typical methods known to those skilled in the art.
The addition of the mixture M and the water-soluble amphoteric polymer PA is done in sequence, that is, the mixture M is added first, followed by the addition of the water-soluble amphoteric polymer PA.
Independently of each other, the mixture M and the water-soluble amphoteric polymer PA may be added to the fibrous suspension in powder form or in diluted or undiluted aqueous solution form. Preferably, they are added in the form of diluted aqueous solutions.
Thus, the mixture M and the water-soluble amphoteric polymer PA may be introduced into the thick stock or into the thin stock. They may be added at the mixing pump, before the headbox or the filter screen. Preferably, the mixture M is added to the thick stock and the water-soluble amphoteric polymer PA is added to the thin stock.
In a preferred embodiment, the mixture M and the water-soluble amphoteric polymer PA are injected industrially into the fibrous suspension before its dilution with white water, i.e., the thick stock which consistency is of the order of 1 to 5% by mass of cellulosic fibers.
The method of manufacturing a sheet of paper or cardboard may be implemented with any type of paper pulp, such as for example virgin fiber pulps (Kraft, Bisulfite), recycled fiber pulps, de-inked pulps, chemical pulps, mechanical pulps and thermomechanical pulps.
The mixture M and the water-soluble amphoteric polymer PA may be added at a single point or at two injection points, preferably at two injection points.
The papermaking method according to the invention may also include the addition of other additives and/or polymers according to needs. By way of example and in a non-limiting manner, we may mention: biocides, coagulants, retention agents, flocculants, starch, etc.
The quantity of the mixture M added to the fibrous suspension is advantageously comprised between 0.1 and 5 kg/ton of dry matter of the fibrous suspension, preferably between 0.5 and 4 kg/ton, more preferably between 1 and 3 kg/ton.
The quantity of the water-soluble amphoteric polymer PA added to the fibrous suspension is advantageously comprised between 0.1 and 5 kg/ton of dry matter of the fibrous suspension, preferably between 0.5 and 4 kg/ton, more preferably between 1 and 3 kg/ton.
The ratio by weight between the mixture M and the water-soluble amphoteric polymer PA is advantageously comprised between 1:50 and 50:1, preferably between 1:8 and 8:1, more preferably between 1:3 and 3:1.

**Mixture M**

The mixture M comprises at least:

a) an aluminum salt;
b) a water-soluble cationic aldehyde polymer.

<u>Aluminum Salt</u>

The aluminum salt may be any aluminum compound. For example, and in a non-limiting manner, it may be selected from aluminum chlorohydrates, aluminum chloride, aluminum polychlorides, aluminum sulfate, aluminum polysulfates, aluminum disulfate and potassium, hydrated potassium aluminum disulfate, and mixtures thereof. Preferably, the aluminum salt is a polyaluminum chloride or an aluminum chlorohydrate.

Examples of polyaluminum chloride (PAC) include PAC 18% or PAC 10HB.

The water soluble cationic aldehyde polymer

Advantageously, the water-soluble cationic aldehyde polymer comprises at least:

a) a hydrophilic cationic monomer $A_{PCA}$;
b) a hydrophilic non-ionic monomer $C_{PCA}$.

The monomers $A_{PCA}$ and $C_{PCA}$ of the water-soluble cationic aldehyde polymer are selected independently of the hydrophilic cationic monomer $A_{PHA}$ and hydrophilic non-ionic monomer $C_{PHA}$ of the water-soluble amphoteric polymer PA.

Advantageously, the hydrophilic cationic monomer(s) $A_{PCA}$ that may be used in the context of the invention (the water-soluble cationic aldehyde polymer and the water-soluble amphoteric polymer PA) are selected, in particular, from monomers of the vinyl type, notably acrylamide, acrylic, allylic or maleic monomers possessing a protonable amine or ammonium function, advantageously quaternary ammonium. Mention may be made, in particular and in a non-limiting manner, of diallyldialkyl ammonium salts such as diallyldimethylammonium chloride (DADMAC); acidified or quaternized salts of dialkyl-aminoalkyl(meth)acrylamides, such as for example (3-methacrylamidopropyl)trimethylammonium chloride (MAPTAC), (3-acrylamidopropyl)trimethylammonium chloride (APTAC); acidified or quaternized salts of dialkyl-aminoalkyl acrylate such as quaternized or salified dimethylaminoethyl acrylate (DMAEA); acidified or quaternized salts of dialkyl aminoalkyl methacrylate such as quaternized or salified dimethylaminoethyl methacrylate (DMAEMA); acidified or quaternized salts of N,N-dimethylallylamine; acidified or quaternized salts of diallylmethylamine; acidified or quaternized salts of diallylamine; the vinylamine obtained by the hydrolysis (basic or acid) of an amide group $-N(R^2)-CO-R^1$ with $R^1$ and $R^2$ being, independently, a hydrogen atom or an alkyl chain from 1 to 6 carbons, for example vinylamine resulting from the hydrolysis of vinylformamide; vinylamine obtained by Hofmann degradation; and their mixtures. Advantageously, the alkyl groups are $C_1$-$C_7$, preferably $C_1$-$C_3$ and may be linear, cyclic, saturated, or unsaturated chains. Preferably, the hydrophilic cationic monomer $A_{PCA}$ is the diallyldimethylammonium chloride.

The water-soluble cationic aldehyde polymer advantageously comprises between 1 and 60 mol% of the hydrophilic cationic monomer(s) $A_{PCA}$, preferably between 2 and 50 mol%, more preferably between 3 and 40 mol%, most preferably between 4 and 30 mol%.

A person skilled in the art will know how to prepare the quaternized monomers, e.g., by means of alkyl halide of the R-X type, wherein R is an alkyl group, and X is a halogen.

By "quaternization agent" we mean a molecule capable of alkylating a tertiary amine.

The quaternization agent may be selected from dialkyl sulfates comprising from 1 to 6 carbon atoms or alkyl halides comprising from 1 to 6 carbon atoms. Preferably, the quaternization agent is selected from methyl chloride, benzyl chloride, dimethyl sulfate, or diethyl sulfate.

Furthermore, this invention also covers the monomers of the DADMAC, APTAC, and MAPTAC type, the halide counterion of which is a sulfate, fluoride, bromide or iodide instead of chloride.

The hydrophilic non-ionic monomer(s) $C_{PCA}$ are selected from acrylamide, methacrylamide, and mixtures thereof. Preferably, it is acrylamide.

The water-soluble cationic aldehyde polymer may optionally comprise one or more hydrophilic non-ionic monomers $E_{PCA}$, advantageously selected from: N-alkylacrylamides, N-alkylmethacrylamides, N,N-dialkyl acrylamides (for example N,N-dimethylacrylamide or N,N-diethylacrylamide), N,N-dialkylmethacrylamides, alkoxylated esters of acrylic acid, alkoxylated esters of methacrylic acid, N-vinylpyrrolidone, N-methylol(meth)acrylamide, N- vinyl caprolactam, N-vinylformamide (NVF), N-vinyl acetamide, N-vinyl imidazole, N-vinyl succinimide, acryloyl morpholine (ACMO), glycidyl methacrylate, vinyl acetate, methacrylate glyceryl, diacetone acrylamide, methacrylic anyhydride,acrylonitrile, maleic anhydride, itaconic anhydride, itaconamide, hydroxyalkyl (meth)acrylate, thioalkyl (meth)acrylate, isoprenol and its derivatives alkoxylated, hydroxyethyl(meth)acrylates and their alkoxylated derivatives, hydroxypropyl(meth)acrylate and its alkoxylated derivatives, and mixtures thereof. Among these non-ionic monomers, the alkyl groups are advantageously in $C_1$-$C_5$, more advantageously in $C_1$-$C_3$.

The water-soluble cationic aldehyde polymer advantageously comprises between 40 and 99 mol% of hydrophilic non-ionic monomers ($C_{PCA}$+$E_{PCA}$), preferably between 50 and 98 mol%, more preferably between 60 and 97 mol% and even more preferably between 70 and 96 mol%.

The water-soluble cationic aldehyde polymer may optionally comprise one or more hydrophilic anionic monomers (designated "monomer(s) $B_{PCA}$").

Advantageously, the other hydrophilic anionic monomer(s) $B_{PCA}$ that may be used in the context of the invention may be selected from a broad group. These monomers may have a functional vinyl group, in particular acrylic, maleic, fumaric, malonic, itaconic, or allylic. The monomers may also contain a carboxylate, phosphonate, phosphate, sulfonate,

sulfate, or other anionically charged group. Preferred monomers belonging to this class are, e.g., acrylic acid; methacrylic acid; dimethylacrylic acid; itaconic acid; the $C_1$-$C_3$ half-esters of itaconic acid; acryloyl chloride; crotonic acid; maleic acid; fumaric acid; 3-acrylamido 3-methylbutanoic acid; strong acid type monomers having for example a sulfonic acid or phosphonic acid type function such as vinylsulfonic acid, vinylphosphonic acid, allylsulfonic acid, methallylsulfonic acid, 2-methylidenepropane-1,3 acid -disulfonic, 2-sulfoethylmethacrylate, sulfopropylmethacrylate, sulfopropylacrylate, allylphosphonic acid, ethylene glycol methacrylate phosphate, styrene sulfonic acid, 2-acrylamido-2-methylpropane sulfonic acid (ATBS), 1 2-acrylamido-2-methylpropane disulfonic acid, 3-allyloxy-2-hydroxypropane sulfonic acid, diethylallyl phosphonate, carboxyethyl acrylate; the water-soluble salts of these monomers such as their alkali metal, alkaline earth metal, or ammonium salts; and mixtures thereof. Preferably, it is acrylic acid and/or 2-acrylamido-2-methylpropane sulfonic acid (ATBS), more preferably it is acrylic acid.

In a particular embodiment of the invention, the hydrophilic anionic monomer(s) $B_{PCA}$ may be partially or fully salified.

By salified, we mean the substitution of a proton of at an least one acid function of the -R(=O)-OH type (with R representing P, S, or C) of the anionic monomer by a metal cation or ammonium to form a salt of the -R(=O)-OX type (X being a metal cation or an organic cation). In other words, the non-salified form corresponds to the acid form of the monomer, for example R-C(=O)-OH in the case of the carboxylic acid function, while the salified form of the monomer corresponds to the R-C(=O)-O$^-$ X$^+$ form, X$^+$ corresponding to an alkaline cation or an organic cation. The acid functions of the water-soluble cationic aldehyde polymer may be partially or fully salified.

The salified form advantageously corresponds to salts of alkali metals (Li, Na, K, etc.), alkaline earth metals (Ca, Mg, etc.) or ammonium (e.g., ammonium ion or tertiary ammonium), or mixtures thereof. Preferred salts are sodium and lithium salts.

Salification may be carried out, partially or fully, before, during, or after polymerization.

In a particular embodiment of the invention, the water-soluble cationic aldehyde polymer advantageously comprises between 1 and 100 mol% of its hydrophilic anionic monomers $B_{PCA}$ in salified form, preferably between 10 and 90 mol%.

Advantageously, the water-soluble cationic aldehyde polymer comprises less than 30 mol% of hydrophilic anionic monomers $B_{PCA}$, preferably less than 10 mol%.

In a preferred embodiment, the water-soluble cationic aldehyde polymer is free of hydrophilic anionic monomers $B_{PCA}$.

The water-soluble cationic aldehyde polymer may optionally comprise one or more hydrophilic zwitterionic monomers ($D_{PCA}$) and/or one or more hydrophobic monomers ($F_{PCA}$).

Advantageously, the hydrophilic zwitterionic monomer(s) $D_{PCA}$ which may be used in the context of the invention are, in particular, selected from derivatives of a vinyl-type unit (advantageously acrylamide, acrylic, allylic or maleic), this monomer having an amine or quaternary ammonium function and an acid function of the carboxylic (or carboxylate), sulfonic (or sulfonate) or phosphoric (or phosphate) type.

Preferably, this monomer comprises an amine or quaternary ammonium function and an acid function of the carboxylic (or carboxylate), sulfonic (or sulfonate) or phosphoric (or phosphate) type.

In a non-limitative manner, examples of zwitterion monomers are, e.g., dimethylaminoethyl acrylate derivatives, such as 2 - ((2-9(acryloyloxy)ethyl) dimethylammonio)ethane-1-sulfonate, 3 - ((2- (acryloyloxy) ethyl) dimethylammonio) propane-1-sulfonate, 4 - ((2- (acryloyloxy) ethyl) dimethylammonio) butane-1-sulfonate, [2- (acryloyloxy) ethyl ](dimethylammonio)acetate, dimethylaminoethyl methacrylate derivatives such as 2-((2-(methacryloyloxy)ethyl)dimethylammonio)ethane-1-sulfonate, 3-((2-(methacryloyloxy)ethyl)dimethylammonio)propane- 1-sulfonate, 4-((2-(methacryloyloxy) ethyl)dimethylammonio)butane-1-sulfonate, [2-(methacryloyloxy)ethyl](dimethylammonio)acetate, propylacrylamide dimethylamino derivatives such as 2-((3-acrylamidopropyl)dimethylammonio)ethane-1-sulfonate, 3-((3-acrylamidopropyl) dimethylammonio)propane-1-sulfonate, 4-((3-acrylamidopropyl) dimethylammonio) butane-1-sulfonate, [3- (acryloyl) oxy) propyl] (dimethylammonio) acetate, dimethylamino propyl methylacrylamide, or derivatives such as 2 - ((3-methacrylamidopropyl) dimethylammonio) ethane- 1-sulfonate, 3-(-me dimethylammonio)propane-1-sulfonate 4-((3-methacrylamidopropyl)dimethylammonio)butane-1-sulfonate and propyl[3-(methacryloyloxy)](dimethylammonio) acetate and the mixtures thereof.

Other hydrophilic zwitterionic monomers may be used, in particular those described by the Applicant in document WO2021/123599.

Advantageously, the water-soluble cationic aldehyde polymer comprises less than 30 mol% of hydrophilic zwitterionic monomers $D_{PCA}$, preferably less than 10 mol%.

In a preferred embodiment, the water-soluble cationic aldehyde polymer is free of hydrophilic zwitterionic monomers $D_{PCA}$.

Advantageously, the monomer(s) $F_{PCA}$ having a hydrophobic character which can be used in the context of the invention can be selected, in particular, from esters of (meth)acrylic acid having a (i) $C_4$-$C_{30}$alkyl, or (ii) arylalkyl ($C_4$-$C_{30}$, alkyl, $C_4$-$C_{30}$ aryl), or (iii) propoxylated, or (iv) ethoxylated, or (v) ethoxylated and propoxylated chain; alkyl aryl sulfonates

($C_4$-$C_{30}$ alkyl, $C_4$-$C_{30}$ aryl); mono- or di-substituted (meth)acrylamide amides having a (i) $C_4$-$C_{30}$ alkyl, or (ii) arylalkyl ($C_4$-$C_{30}$ alkyl, $C_4$-$C_{30}$ aryl), or (iii) propoxylated, or (iv) ethoxylated, or (v) ethoxylated and propoxylated chain; anionic or cationic monomer derivatives of (meth)acrylamide or (meth)acrylic acid bearing a hydrophobic chain; vinylpyridine, and mixtures thereof. Hydrophobic monomers may include halogen atoms, for example chlorine.

Among these hydrophobic monomers $F_{PCA}$:

- the alkyl groups are preferably $C_4$-$C_{20}$, more preferably $C_4$-$C_8$. $C_6$-$C_{20}$ alkyls are preferably linear alkyls while $C_4$-$C_5$ alkyls are preferably branched,
- arylalkyl groups are preferably $C_7$-$C_{25}$, more preferably $C_7$-$C_{15}$,
- the ethoxylated chains advantageously comprise between 1 and 200 $-CH_2-CH_2-O-$ groups, preferably between 6 and 100, more preferably between 10 and 40,
- the propoxylated chains advantageously comprise between 1 and 50 $-CH_2-CH_2-CH_2-O-$groups, more preferably between 1 and 20.

Preferred hydrophobic monomers belonging to these classes are, for example:

- n-hexyl (meth)acrylate, n-octyl (meth)acrylate, octyl (meth)acrylamide, lauryl (meth)acrylate, lauryl (meth)acrylamide, myristyl (meth)acrylate, myristyl (meth)acrylamide, pentadecyl (meth)acrylate, pentadecyl (meth)acrylamide, cetyl (meth)acrylate, Cetyl (meth)acrylamide, oleyl (meth)acrylate, oleyl (meth)acrylamide, erucyl (meth)acrylate, erucyl (meth)acrylamide, N-tert-Butyl(meth)acrylamide, 2-ethylhexyl acrylate, hemi-esters of $C_4$-$C_{22}$itaconic acid, acidified or quaternized salts of $C_4$-$C_{22}$dialkyl aminoalkyl (meth)acrylate, salts acidified or quaternized $C_4$-$C_{22}$dialkyl-aminoalkyl(meth)acrylamides, acrylamido undecanoic acid, and mixtures thereof,
- cationic allyl derivatives of formula (I) or (II):

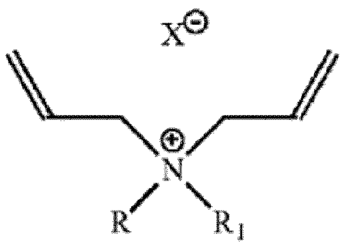

(I)

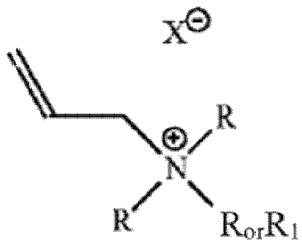

(II)

in which:

R: independently an alkyl chain containing 1 to 4 carbons;
$R_1$: an alkyl or arylalkyl chain containing 8 to 30 carbons ;
X: a halide selected from the group consisting of bromides, chlorides, iodides, fluorides and any negatively charged counterion;
and, preferably, hydrophobic cationic derivatives of the (meth)acryloyl type corresponding to formula (III):

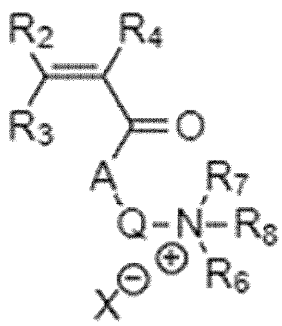

(III)

in which:

- A represents O or N-$R_5$ (preferably A represents N-$R_5$),
- $R_2$, $R_3$, $R_4$, $R_5$, $R_6$, $R_7$: independently a hydrogen atom or an alkyl chain containing 1 to 4 carbons,
- Q: an alkyl chain comprising 1 to 20 carbons,
- $R_8$: an alkyl or arylalkyl chain comprising 8 to 30 carbons,
- X: a halide selected from the group composed of bromides, chlorides, iodides, fluorides, and any negatively charged counterions.

The water-soluble cationic aldehyde polymer advantageously comprises less than 1 mol% of hydrophobic monomers $F_{PCA}$.
When the water-soluble cationic aldehyde polymer comprises hydrophobic monomers $F_{PCA}$, they are present in an amount such that the polymer remains water-soluble.
In a preferred embodiment, the water-soluble cationic aldehyde polymer is free of hydrophobic monomer $F_{PCA}$.
The amounts of the other monomers will be adjusted by one skilled in the art so as not to exceed 100 mol% in the preparation of the water-soluble cationic aldehyde polymer.
In a preferred embodiment, the monomers $A_{PCA}$ and $C_{PCA}$ represent 100 mol% of the monomers of the water-soluble cationic aldehyde polymer.
The water-soluble cationic aldehyde polymer may further comprise at least one cross-linking agent.
The cross-linking agent is advantageously selected from:

- structural agents, which may be selected from the group comprising polyethylenically unsaturated compounds (having at least two unsaturated functions) different from hydrophilic cationic monomer(s) $A_{PHA}$, such as for example vinyl functions, in particular allylic or acrylic functions, for example methylene bis acrylamide (MBA), triallyamine, or tetraallylammonium chloride or 1,2 dihydroxyethylene bis-(N-acrylamide),
- compounds having at least two epoxy functions,
- compounds having at least one unsaturated function and one epoxy function,
- macroinitiators such as polyperoxides, polyazos and polytransfer agents such as polymercaptant polymers, and polyols,
- functionalized polysaccharides,
- water-soluble metal complexes compounds:

  * of a metal with a valence greater than 3 such as, by way of example and without limitation, aluminum, boron, zirconium or even titanium, and
  * of a ligand carrying a hydroxyl function.

The quantity of cross-linking agent in the water-soluble cationic aldehyde polymer is advantageously comprised between 5 and 5,000 ppm, with regard to the total weight of the monomers constituting the water-soluble cationic aldehyde polymer, more preferably between 50 and 3,000 ppm.
When the water-soluble cationic aldehyde polymer according to the invention comprises a cross-linking agent, the polymer remains soluble in water. One skilled in the art will know how to adjust the amount of cross-linking agent, and possibly the amount of transfer agent, to achieve this result.
In a particular embodiment, the water-soluble cationic aldehyde polymer comprises no cross-linking agent.
The water-soluble cationic aldehyde polymer may further comprise at least one transfer agent, e.g., selected from methanol; isopropyl alcohol; sodium hypophosphite; calcium hypophosphite; magnesium hypophosphite; potassium hypophosphite; ammonium hypophosphite; formic acid; sodium formate; calcium formate; magnesium formate; potassium formate; ammonium formate; 2-mercaptoethanol; 3-mercaptopropanol; dithiopropylene glycol; thioglycerol; thioglycolic acid; thiohydracrylic acid; thiolactic acid; thiomalic acid; cysteine; aminoethanethiol; thioglycolates; allyl phosphites; allyl mercaptans, such as n-dodecyl mercaptan; sodium methylsulfonate; calcium methylsulfonate; magnesium methylsulfonate; potassium methylsulfonate; ammonium methylsulfonate; alkyl phosphites such as tri-alkyl ($C_{12}$-$C_{15}$) phosphites, di-oleyl hydrogen phosphites, dibutyl phosphite; dialkyldithiophosphates such as dioctyl phosphonate; tertiary nonylmercaptan; 2-ethylhexyl thioglycollate; n-octyl mercaptan; n-dodecyl mercaptan; tertio-dodecyl mercaptan; iso-octylthioglycolate; 2-ethylhexyl thioglycollate; 2-ethylhexyl mercaptoacetate; polythiols; and mixtures thereof. Preferably, sodium hypophosphite or sodium formate will be used.
The quantity of transfer agent in the water-soluble cationic aldehyde polymer is advantageously comprised between 10 and 10,000 ppm with regard to the total weight of the monomers constituting the water-soluble cationic aldehyde polymer, preferably between 50 and 5,000 ppm.
In a particular embodiment, the water-soluble cationic aldehyde polymer comprises no transfer agent.
The water-soluble cationic aldehyde polymer is prepared from a base polymer on which a dialdehyde is reacted. It may be prepared according to different methods, such as for example the method described in document US

2011/0056640, document FR2987375 of the Applicant, or in the patent application having the filing number FR2305149 of the Applicant. Preferably the water-soluble cationic aldehyde polymer is prepared according to the Applicant's document FR2305149.

When the water-soluble cationic aldehyde polymer is prepared according to document FR2305149, the monomer $C_{PCA}$ does not include N-alkylacrylamides and N,N-dialkyl acrylamides while the hydrophilic anionic monomers $B_{PCA}$ does not include allylsulfonic acid and methallylsulfonic acid.

Advantageously, the dialdehyde is selected from glyoxal, glutaraldehyde, furan-dialdehyde, adipaldehyde, succinaldehyde, starch dialdehyde, 2,2 dimethoxyethanal, and mixtures thereof. Preferably, it is glyoxal.

Advantageously, the concentration by weight of dialdehyde in the water-soluble aldehyde polymer is between 5 and 40% with regard to the total weight of the monomers constituting the aldehyde base polymer, preferably between 10 and 35%, more preferably between 15 and 30%.

Physical characteristics of the polymer base

The base polymer has a weight average molecular weight advantageously comprised between 50,000 and 5,000,000 g/mol, preferably between 100,000 and 3,000,000 g/mol, more preferably between 150,000 and 2,000,000 g/mol, even more preferably between 200,000 and 1,000,000 g/mol, and even more preferably between 300,000 and 800,000 g/mol.

When the base polymer is obtained according to the method described in patent application FR2305149, its weight average molecular weight is advantageously comprised between 1,000,000 and 25,000,000 g/mol, preferably between 2,000,000 and 15,000,000 g/mol, more preferably between 3,000,000 and 10,000,000 g/mol

The weight average molecular weight is preferably measured by Gel Permeation Chromatography coupled to a Malls detector.

The Brookfield viscosity of the solution comprising the base polymer is advantageously between 1,000 and 50,000 cps, preferably between 5,000 and 20,000 cps.

The Brookfield viscosity of the solution comprising the water-soluble cationic aldehyde polymer is advantageously between 5 and 1,500 cps, preferably between 10 and 1,000 cps.

Composition of the mixture M

The weight ratio between the aluminum salt and the water-soluble cationic aldehyde polymer is preferably comprised between 50:50 and 25:75, more preferably between 35:65 and 30:70.

In a preferred embodiment, the mixture M comprises a greater quantity of water-soluble cationic aldehyde polymer than the quantity of aluminum salt.

The mixture M may be and/or may be used in liquid or solid form. Preferably, the mixture M is in liquid form.

**Water-soluble amphoteric polymer PA**

The water-soluble amphoteric polymer PA comprises at least:

a) a hydrophilic cationic monomer $A_{PHA}$;
b) a hydrophilic anionic monomer $B_{PHA}$;
c) a hydrophilic non-ionic monomer $C_{PHA}$;
d) a structuring system comprising at least:

(i) a compound I, different from the hydrophilic anionic monomer(s) $B_{PHA}$, selected from: allylsulfonic acid, methallylsulfonic acid, allyl acid disulfonic acid, methallyl disulfonic acid, their salts and mixtures thereof;
(ii) a compound II of formula (2):

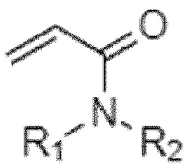

Formula (2)

$R_1$ and $R_2$ being, independently of one another, a hydrogen atom, a methyl group, an ethyl group, an isopropyl group or a $CH_2$-OH group;
$R_1$ and $R_2$ not being both a hydrogen atom ($R_1 \neq H$ when $R_2$=H; $R_2 \neq H$ when $R_1$=H).

Composition of the water-soluble amphoteric polymer PA

Advantageously, the hydrophilic cationic monomer $A_{PHA}$ (s) are selected from the same list as the hydrophilic cationic monomers $A_{PCA}$ described previously for the water-soluble cationic aldehyde polymer.

Water-soluble amphoteric polymer PA advantageously comprises between 1 and 45 mol% of hydrophilic cationic monomer(s) $A_{PHA}$, preferably between 3 and 40 mol%, more preferably between 5 and 30 mol%.

Advantageously, the other hydrophilic anionic monomer(s) $B_{PHA}$ have a vinyl function, in particular acrylic, maleic, fumaric, malonic, itaconic or allylic. They may also contain a carboxylate, phosphonate, phosphate, sulfonate, sulfate or other anionically charged group. Preferred monomers belonging to this class are, e.g., acrylic acid; methacrylic acid; dimethylacrylic acid; itaconic acid; $C_1$-$C_3$ hemiesters of itaconic acid; acryloyl chloride; crotonic acid; maleic acid; fumaric acid; 3-acrylamido 3-methylbutanoic acid; strong acid monomers with, e.g., a sulfonic acid or phosphonic acid function, such as vinylsulfonic acid, vinylphosphonic acid, 2-methylidenepropane-1,3-disulfonic acid, 2-sulfoethylmethacrylate, sulfopropylmethacrylate, sulfopropylacrylate, allylphosphonic acid, ethylene glycol methacrylate phosphate, styrene sulfonic acid, 2-acrylamido-2-methylpropane sulfonic acid (ATBS), 2-acrylamido-2-methylpropane disulfonic acid, 3-allyloxy-2-hydroxypropane sulfonic acid, diethylallylphosphonate, carboxyethyl acrylate; water-soluble salts of these monomers, such as alkali metal, alkaline earth metal or ammonium salts; and mixtures thereof.

Water-soluble amphoteric polymer PA advantageously comprises between 0.1 and 30 mol% of hydrophilic anionic monomer(s) $B_{PHA}$, preferably between 0.5 and 20 mol%, more preferably between 1 and 10 mol%.

In a particular embodiment, the hydrophilic anionic monomer(s) $B_{PHA}$ may be salified.

By salified, we mean the substitution of a proton of at least one acid function of the -$R^a$(=O)-OH type (with $R^a$ representing P, S or C) of the anionic monomer by a metal or ammonium cation to form a salt of the -$R^a$(=O)-OX type (X being a metal cation, an inorganic cation or an organic cation). In other words, the non-salified form corresponds to the acid form of the monomer, for example $k^b$-C(=O)-OH in the case of the carboxylic acid function, while the salified form of the monomer corresponds to the $R^b$-C(=O)-$O^-$ $X^+$ form, $X^+$ corresponding to an alkaline cation or an organic cation. The neutralization of the acid functional groups of the polymeric micro-gel may be partial or total.

The salified form advantageously corresponds to the salts of alkali metals (Li, Na, K, etc.), of alkaline-earth metals (Ca, Mg, etc.) or of ammonium (e.g., ammonium ion or a tertiary ammonium). Preferred salts are sodium salts.

Salification may take place before, during, or after the polymerization.

Advantageously, 0 to 100 mol% of the hydrophilic anionic monomer(s) $B_{PHA}$ may be in salified form, preferably 50 to 100 mol%. Thus, 50 mol% of hydrophilic anionic $B_{PHA}$ monomer(s) may be in salt form and 50 mol% in acid form.

In a preferred embodiment, in water-soluble amphoteric polymer PA, the molar quantity of cationic monomer $A_{PHA}$ is greater than the quantity of anionic monomer $B_{PHA}$, in other words its overall charge is cationic.

Advantageously, the hydrophilic non-ionic monomer(s) $C_{PHA}$ is selected from acrylamide, methacrylamide, N-vinylformamide (NVF), and mixtures thereof. Preferably, acrylamide would be used.

The water-soluble amphoteric polymer PA may optionally comprise one or more hydrophilic non-ionic monomers $E_{PHA}$, advantageously selected from: N-alkylmethacrylamides, N,N-dialkylmethacrylamides, alkoxylated esters of acrylic acid, alkoxylated esters of methacrylic acid, N-vinylpyrrolidone, N-methylol(meth)acrylamide, N- vinyl caprolactam, N-vinyl acetamide, N-vinyl imidazole, N-vinyl succinimide, acryloyl morpholine (ACMO), glycidyl methacrylate, vinyl acetate, methacrylate glyceryl, diacetone acrylamide, methacrylic anyhydride,acrylonitrile, maleic anhydride, itaconic anhydride, itaconamide, hydroxyalkyl (meth)acrylate, thioalkyl (meth)acrylate, isoprenol and its derivatives alkoxylated, hydroxyethyl(meth)acrylates and their alkoxylated derivatives, hydroxypropyl(meth)acrylate and its alkoxylated derivatives, and mixtures thereof. Among these non-ionic monomers, the alkyl groups are advantageously in $C_1$-$C_5$, more advantageously in $C_1$-$C_3$.

The water-soluble amphoteric polymer PA advantageously comprises between 35 and 89.9 mol% of hydrophilic non-ionic monomer(s) ($C_{PHA}$+$E_{PHA}$), preferably between 55 and 97.5 mol%, more preferably between 75 and 94 mol%.

The water-soluble amphoteric polymer PA may optionally comprise one or more hydrophilic zwitterionic monomers $D_{PHA}$ and/or one or more hydrophobic monomers $F_{PHA}$.

Advantageously, the monomer(s) $D_{PHA}$ and $F_{PHA}$ are selected from the same list as the monomers $D_{PCA}$ and $F_{PCA}$ described previously for the hydrophilic zwitterionic and hydrophobic monomers of the water-soluble cationic aldehyde polymer.

The water-soluble amphoteric polymer PA advantageously comprises less than 30 mol% hydrophilic zwitterionic monomers $D_{PHA}$, preferably less than 10 mol%.

In a preferred embodiment, the water-soluble amphoteric polymer PA is free of hydrophilic zwitterionic monomers $D_{PHA}$.

The water-soluble amphoteric polymer PA advantageously comprises less than 1 mol% hydrophobic $F_{PHA}$ monomers.

When the water-soluble amphoteric PA polymer comprises hydrophobic monomers $F_{PHA}$, they are present in such quantities that the polymer remains water-soluble.

In a preferred embodiment, water-soluble amphoteric polymer PA is free of hydrophobic monomer $F_{PHA}$.

The quantities of the various monomers will be adjusted by one skilled in the art so as not to exceed 100% molar when preparing water-soluble amphoteric polymer PA.

In a preferred embodiment, the monomers $A_{PHA}$, $B_{PHA}$ and $C_{PHA}$ represent 100 mol% of the monomers of water-soluble amphoteric polymer PA.

In a preferred embodiment, water-soluble amphoteric polymer PA has a molar quantity of hydrophilic cationic monomer $A_{PHA}$ greater than the molar quantity of hydrophilic anionic monomer $B_{PHA}$.

Structuring System

The structuring system of water-soluble amphoteric polymer PA comprises at least:

(i) a compound I;
(ii) a compound II.

Compound I is selected from: allylsulfonic acid, methallylsulfonic acid, allyl disulfonic acid, methallyl disulfonic acid, their salts and mixtures thereof.

Preferably, it is methallylsulfonic acid, for example, sodium methallylsulfonate.

The salified form advantageously corresponds to the salts of alkali metals (Li, Na, K, etc.), of alkaline-earth metals (Ca, Mg, etc.) or of ammonium (e.g., ammonium ion or a tertiary ammonium). Preferred salts are sodium salts.

The water-soluble amphoteric polymer PA advantageously comprises between 500 and 100,000 ppm of compound I with regard to the total weight of the monomers constituting the water-soluble amphoteric polymer PA, preferably between 1,000 and 80,000 ppm, more preferably between 2,000 and 70,000 ppm.

Compound II used in the context of the invention has the general formula:

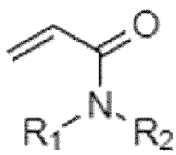

Formula (2)

$R_1$ and $R_2$ being, independently of one another, a hydrogen atom, a methyl group, an ethyl group, an isopropyl group or a $CH_2$-OH group;
$R_1$ and $R_2$ not being both a hydrogen atom ($R_1 \neq H$ when $R_2 = H$; $R_2 \neq H$ when $R_1 = H$).

Compound II is advantageously selected from: N,N-dimethylacrylamide, N,N-diethylacrylamide, N-isopropylacrylamide, N-methylolacrylamide and mixtures thereof. Preferably it is N,N-dimethylacrylamide.

The water-soluble amphoteric polymer PA advantageously comprises between 100 and 50,000 ppm of compound II with regard to the total weight of the monomers constituting water-soluble amphoteric polymer PA, preferably between 200 and 20,000 ppm, more preferably between 500 and 10,000 ppm.

In the water-soluble amphoteric polymer PA, the mass ratio between compound I and compound II is advantageously between 0.01 and 1000, preferably between 0.1 and 150.

In a preferred embodiment, in water-soluble amphoteric polymer PA, the amount of compound I is greater than the amount of compound II. Thus, the mass ratio between compound I and compound II is advantageously greater than 1 and less than or equal to 150, preferably greater than 10 and less than or equal to 110.

The water-soluble amphoteric polymer PA may further comprise at least one cross-linking agent. Advantageously, the cross-linking agent is selected from the list previously described for the water-soluble cationic aldehyde polymer.

The amount of cross-linking agent in the water-soluble amphoteric polymer PA is as described in the water-soluble cationic aldehyde polymer.

In a particular embodiment, water-soluble amphoteric polymer PA does not include a cross-linking agent.

The water-soluble amphoteric polymer PA according to the invention may further comprise at least one transfer agent. The transfer agent and its quantity are as described previously for the water-soluble cationic aldehyde polymer.
In a particular embodiment, the water-soluble amphoteric polymer PA is free of transfer agent.

Physical characteristics of water-soluble amphoteric polymer PA

The water-soluble amphoteric polymer PA has a weight average molecular weight advantageously comprised between 1,000,000 and 25,000,000 g/mol, preferably between 2,000,000 and 15,000,000 g/mol, more preferably between 3,000,000 and 10,000,000 g /mol.
The weight average molecular weight is preferably measured by gel permeation chromatography coupled to a Malls detector.
The water-soluble amphoteric polymer PA is and/or is used in liquid or solid form. Preferably, it is used in liquid form.
The Brookfield viscosity of the solution comprising the water-soluble amphoteric polymer PA is advantageously comprised between 1,000 and 50,000 cps, preferably between 5,000 and 20,000 cps.

**Method for polymerizing the water-soluble amphoteric polymer PA**

The water-soluble amphoteric polymer PA is characterized by its preparation method, it is obtained by polymerization of a first fraction (F1) and at least two additional fractions (F2 and F3). At least one of the fractions F1, F2 and F3 of the method is different from the other fractions. Preferably, the fractions F1, F2, and F3 are different from each other. By different fraction, we mean a fraction having a different monomer composition (ratio and/or nature of monomers) and/or of compounds I and II (ratio and/or nature of compounds I and II).
The method for polymerizing the water-soluble amphoteric polymer PA comprises the following steps:

A) formation of a solution (S1) comprising at least a first fraction (F1) comprising (1) at least one monomer selected from monomers $A_{PHA}$, $B_{PHA}$, and $C_{PHA}$ and/or (2) at least one compound selected from compounds I and II;
B) polymerization 1 (PO1) of fraction F1 to form a solution of a first prepolymer PP1;
C) addition, to the solution comprising the first prepolymer PP1, of a second fraction (F2) comprising (1) at least one monomer selected from monomers $A_{PHA}$, $B_{PHA}$, and $C_{PHA}$ and/or (2) at least one compound chosen from compounds I and II;
D) polymerization 2 (PO2) of fraction F2 on the first prepolymer PP1 to form a solution of a second prepolymer PP2;
E) addition, to the solution comprising the second prepolymer PP2, of a third fraction (F3) comprising (1) at least one monomer selected from monomers $A_{PHA}$, $B_{PHA}$, and $C_{PHA}$ and/or (2) at least one compound chosen from compounds I and II;
F) polymerization 3 (PO3) of the fraction F3 on the second prepolymer PP2 to form a solution comprising the water-soluble amphoteric polymer PA;

at least one of the fractions F1, F2, or F3 comprises at least one monomer $A_{PHA}$,
at least one of the fractions F1, F2, or F3 comprises at least one monomer $B_{PHA}$,
at least one of the fractions F1, F2, or F3 comprises at least one monomer $C_{PHA}$
at least one of the fractions F1, F2, or F3 comprises at least one compound I, and
at least one of the fractions F1, F2, or F3 comprises at least one compound II.

In a preferred embodiment, at least one of the fractions F1, F2 or F3 comprises (1) at least one monomer selected from the monomer(s) $A_{PHA}$, $B_{PHA}$, and $C_{PHA}$ and (2) at least one compound selected from the compounds I and II, even more preferably the three fractions F1, F2 and F3 comprise (1) at least one monomer selected from the monomers $A_{PHA}$, $B_{PHA}$, and $C_{PHA}$ and (2) at least one compound selected from compounds I and II.
This method may comprise the addition of additional fractions prior to the formation of the water-soluble amphoteric polymer PA.
The polymerization process is advantageously carried out in sequence and continuously, i.e., without interruption.
By "in sequence", we mean that the polymerization of the monomers of the water-soluble amphoteric polymer PA takes place several times by adding several fractions while not being interrupted, i.e., that the addition of the fractions is done continuously, and the polymerization does not stop. Steps A) to F) are therefore carried out successively. In other words, a first fraction of monomers may be added by casting and polymerizes so as to form a first prepolymer PP1 which continues to polymerize with the fraction F2 to form the prepolymer PP2, which itself continues to polymerize with the fraction F3 to obtain, at the end of polymerization, water-soluble amphoteric polymer PA. At least one of the fractions F1,

F2, and F3 of the process is different from the other fractions. Preferably, the fractions F1, F2, and F3 are different. The addition of different fractions during the polymerization process makes it possible to obtain a gradient in the composition of the water-soluble amphoteric polymer PA.

In a particular embodiment, the polymerization may be temporarily interrupted after PO1 and/or PO2 and continued in a different location. In this case, the monomers of the FX+1 fraction (X = 1 or 2) added to the PPX prepolymer formed during the previous steps, polymerize and interact with PPX to form PPX+1 and the process continues to the next step to finally obtain water-soluble amphoteric polymer PA.

In the polymerization method according to the invention, the total sum of the molar percentages of the monomers of the different fractions is equal to the total sum of the molar percentages of the monomers of the water-soluble amphoteric polymer PA.

**Step A), formation of a solution (S1) comprising a first fraction (F1)**

**Solution (S1)**

Solution S1 is generally composed of:

- a solvent;
- an initiator;
- a first fraction F1.

The solvent is advantageously water, or a solvent in which the monomers and prepolymers PP1 and PP2 and the water-soluble amphoteric polymer PA are soluble. Preferably, the solvent is water.

The polymerization initiators used may be any of the compounds that dissociate into radicals under polymerization conditions, e.g.: organic peroxides, hydroperoxides, hydrogen peroxide, persulfates, azo compounds and redox couples. The use of water-soluble initiators is preferred. In some cases, it is advantageous to use mixtures of various polymerization initiators, e.g., mixtures of redox catalysts and azo compounds. Preferably, persulfates are used.

In a particular embodiment, solution S1 is formed by mixing the solvent, the initiator, and the fraction F1 in a polymerization tank.

In this particular embodiment, the fraction F1 may be added all at once, several times or by pouring, that is to say gradually (for example drop by drop) into the solvent/initiator mixture. Preferably, fraction F1 is added all at once to the polymerization tank.

In a particular embodiment, the initiator and the fraction F1 are added by casting into a polymerization vessel containing the solvent. They may be added separately or mixed beforehand. Preferably, they are added separately.

In a preferred embodiment, the initiator is added continuously throughout the polymerization process. In this case, the initiator is advantageously added in parallel with the different fractions, during the different polymerization stages and during the possible aging stages of the different prepolymers (PP1 and PP2) and of water-soluble amphoteric polymer PA.

In this preferred embodiment of the invention, the duration of the initiator casting is advantageously between 50 min and 560 min, preferably between 130 min and 430 min.

**First Fraction (F1)**

Advantageously, the fraction F1 comprises between 10 and 45% by weight of monomer ($A_{PHA}$ and/or $B_{PHA}$ and/or $C_{PHA}$, + optionally $E_{PHA}$ and/or $D_{PHA}$ and/or $F_{PHA}$) with regard to the total weight of the monomers constituting the water-soluble amphoteric polymer PA, preferably between 15 and 40% by weight.

Fraction F1 advantageously comprises between 250 and 60,000 ppm of compound I with regard to the total weight of monomers constituting the water-soluble amphoteric polymer PA, preferably between 500 and 50,000 ppm, more preferably between 1,000 and 40,000 ppm.

Fraction F1 advantageously comprises between 50 and 30,000 ppm of compounds II with regard to the total weight of monomers constituting the water-soluble amphoteric polymer PA, preferably between 100 and 10,000 ppm, more preferably between 200 and 5,000 ppm.

The different monomers and compounds of F1 are advantageously added in the form of solutions. These solutions may be added separately or as a mixture to the polymer tank, all at once, several times, or by pouring, i.e., drop by drop, to form the solution S1. Preferably, the addition is done as a mixture and all at once.

When the fraction F1 is added during casting, the casting advantageously lasts between 10 min and 80 min, preferably between 40 min and 70 min.

In a preferred embodiment, the fraction F1 is prepared in the reactor (polymerization tank) before adding initiator.

In a preferred embodiment, fraction F1 comprises at least one hydrophilic cationic monomer A, at least one hydrophilic non-ionic monomer C, at least one compound I and at least one compound II.

**Step B), polymerization of fraction F1 to form a first prepolymer (PP1)**

**Polymerization 1 (PO1)**

Prior to polymerization PO1, the atmosphere of the polymerization tank may be replaced by an inert gas such as, for example, nitrogen or argon.
The polymerization PO1 is generally a radical polymerization. One or more polymerization initiators may be used, in particular initiators dissociating into radicals under the polymerization conditions.
Polymerization PO1 is generally initiated at a temperature between 70 and 90°C, preferably between 75 and 85°C, the polymerization temperature is then controlled using a cooling means, preferably, to not exceed 95°C.
Polymerization PO1 generally lasts between 10 min and 80 min, preferably between 40 min and 70 min.
The polymerization advantageously begins at the moment when the first monomers, the solvent and the initiator are in contact, in other words, the polymerization PO1 duration advantageously corresponds to the duration of the casting of fraction F1.

**Prepolymer (PP1)**

At the end of the polymerization PO1, a prepolymer PP1 is obtained.
In a particular embodiment, the prepolymer PP1 is left to age between 5 min and 60 min, preferably between 10 min and 30 min.
By "left to age" we mean that the temperature of the medium is maintained between 80 and 90°C after the end of the polymerization to allow an increase in viscosity through internal branching phenomena of the polymer. This definition of aging concerns all stages of the polymerization process.

**Step C), addition of a second fraction (F2) to the solution comprising PP1**

**Second fraction F2**

Advantageously, fraction F2 comprises between 30 and 80% by weight of monomer ($A_{PHA}$ and/or $B_{PHA}$ and/or $C_{PHA}$, + optionally $E_{PHA}$ and/or $D_{PHA}$ and/or $F_{PHA}$) with regard to the total weight of monomers constituting the water-soluble amphoteric polymer PA, preferably between 40 and 70% by weight.
Fraction F2 advantageously comprises between 250 and 50,000 ppm of compound I with regard to the total weight of monomers constituting the water-soluble amphoteric polymer PA, preferably between 500 and 40,000 ppm, more preferably between 1,000 and 30,000 ppm.
Fraction F2 advantageously comprises between 0 and 30,000 ppm of compounds II with regard to the total weight of monomers constituting the water-soluble amphoteric polymer PA, preferably between 0 and 10,000 ppm, more preferably between 0 and 5,000 ppm.
The different monomers and compounds of F2 are advantageously added in the form of solutions. These solutions may be added separately or as a mixture to the polymer tank, all at once, in several times or in pouring. Preferably, the addition is done as a mixture and in casting.
When the fraction F2 is added during casting, the casting advantageously lasts between 10 min and 100 min, preferably between 30 min and 90 min.
In a preferred embodiment, fraction F2 comprises at least one hydrophilic anionic monomer $B_{PHA}$, at least one hydrophilic non-ionic monomer $C_{PHA}$ and at least one compound I.

**Step D), polymerization of fraction F2 on PP1 to form a second prepolymer (PP2)**

**Polymerization (PO2)**

The polymerization PO2 is carried out as a continuation of the polymerization PO1, it is carried out under the same time and temperature conditions (advantageously 70 to 90°C).
The polymerization PO2 advantageously lasts between 10 min and 100 min, preferably between 30 min and 90 min.
The polymerization PO2 begins with the addition of the first monomers of the F2 fraction.
Advantageously, the polymerization PO2 duration corresponds to the duration of the casting of the fraction F2. In

this case, the polymerization PO2 begins at the same time as casting.

**Prepolymer (PP2)**

At the end of the polymerization PO2, a prepolymer PP2 is obtained.
In a particular embodiment, the prepolymer PP2 is left to age between 5 and 60 min, preferably between 10 min and 30 min.

**Step E), addition of a third fraction (F3) to the solution comprising PP2**

**Fraction F3**

Advantageously, fraction F3 comprises between 5 and 40% by weight of monomer ($A_{PHA}$ and/or $B_{PHA}$ and/or $C_{PHA}$, + optionally $E_{PHA}$ and/or $D_{PHA}$ and/or $F_{PHA}$) with regard to the total weight of monomers constituting the water-soluble amphoteric polymer PA, preferably between 10 and 30% by weight.
Fraction F3 advantageously comprises between 0 and 20,000 ppm of compounds I with regard to the total weight of monomers constituting the water-soluble amphoteric polymer PA, preferably between 10 and 15,000 ppm, more preferably between 20 and 10,000 ppm.
Fraction F3 advantageously comprises between 0 and 10,000 ppm of compounds II with regard to the total weight of monomers constituting the water-soluble amphoteric polymer PA, preferably between 0 and 1,000 ppm.
The different monomers and compounds of F3 are advantageously added in the form of solutions. These solutions may be added separately or as a mixture to the polymer tank, all at once, several times, or by pouring, i.e., drop by drop. Preferably, the addition is carried out by mixing and drop by drop.
When fraction F3 is added during casting, the casting advantageously lasts between 10 min and 100 min, preferably between 30 min and 90 min.
In a preferred embodiment, fraction F3 comprises at least one hydrophilic anionic monomer $B_{PHA}$, at least one hydrophilic non-ionic monomer $C_{PHA}$ and at least one compound I.

**Step F), polymerization of fraction F3 on PP2 to form water-soluble amphoteric polymer PA**

**Polymerization (PO3)**

The polymerization PO3 is carried out as a continuation of the polymerization PO2. It is carried out under the same time and temperature conditions as PO2 (advantageously 70 to 90°C for 10 min to 100 min, preferably between 30 min and 90 min.) .
Polymerization PO3 begins with the addition of the first monomers of the fraction F3.
Advantageously, the duration of the polymerization PO3 corresponds to the duration of the casting of the fraction F3.
At the end of the polymerization PO3, the water-soluble amphoteric polymer PA is obtained.
In a particular embodiment, water-soluble amphoteric polymer PA is left to age between 10 and 100 min before the elimination of the residual monomers, preferably between 30 and 90 min.
The reaction is stopped by adding an excess of initiator and/or water; this step is used to eliminate any residual monomers present in the solution comprising the water-soluble amphoteric polymer PA.

**Optional Step(s)**

The method according to the invention may further comprise additional steps and is not limited to the steps described above.
In a particular embodiment, the polymerization method according to the invention may comprise the addition of additional monomer fractions constituting water-soluble amphoteric polymer PA.
In a particular embodiment, a cross-linking agent and/or a transfer agent is added during at least one of the steps described above.
In a particular embodiment, a cross-linking agent is added in fraction F1 and/or in fraction F2.
When a cross-linking agent is added, it is advantageously selected from the cross-linking agents previously mentioned.
When a crosslinking agent is added, its amount is advantageously between 5 and 5,000 ppm with regard to the total weight of monomer constituting the water-soluble amphoteric polymer PA, preferably between 50 and 3,000 ppm.
In a particular embodiment, a cross-linking agent is added into fraction F1 and/or into fraction F2.

When a transfer agent is added, it is advantageously selected from the transfer agents previously mentioned.
When a transfer agent is added, its quantity is advantageously between 10 and 10,000 ppm with regard to the total weight of monomer constituting water-soluble amphoteric polymer PA, preferably between 50 and 5,000 ppm.
In a preferred embodiment, the monomers $A_{PHA}$ and $B_{PHA}$ are added in different fractions. In this case, monomers $A_{PHA}$ and $B_{PHA}$ may be added in several fractions, but they are not added in the same fraction, e.g., monomers $A_{PHA}$ may be added in fractions F1 and F2, monomers $B_{PHA}$ are then added in fraction F3; or the monomers $B_{PHA}$ may be added in fractions F2 and F3, the monomers $A_{PHA}$ are then added in fraction F 1; or else, the monomers $B_{PHA}$ may be added in fractions F1 and F2, the monomers $A_{PHA}$ are then added in fraction F3; or the monomers $A_{PHA}$ may be added in fractions F2 and F3, the monomers $B_{PHA}$ are then added in fraction F1
In a preferred embodiment, the monomers $A_{PHA}$ and $B_{PHA}$ are added in different fractions and:

(i) the fraction F1 comprises at least 50 mol% of the monomers $A_{PHA}$ with regard to the total quantity of monomers $A_{PHA}$ in the water-soluble amphoteric polymer PA, or at least 50 mol% of the monomers $B_{PHA}$ with regard to the total quantity of monomer $B_{PHA}$ in water-soluble amphoteric polymer PA, and;
(ii) the fraction F3 comprises at least 50 mol% of the monomers $A_{PHA}$ with regard to the total quantity of monomers $A_{PHA}$ in the water-soluble amphoteric polymer PA, or at least 50 mol% of the monomers $B_{PHA}$ with regard to the quantity total monomers $B_{PHA}$ in water-soluble amphoteric polymer PA.

The invention and the resulting advantages will emerge better from the following non-limiting examples given in order to illustrate the invention.

**Examples**

DADMAC: Diallyldimethyl ammonium chloride
MBA: N,N'-methylenebisacrylamide
AM: Acrylamide
SPS: Sodium persulfate
DMA: Dimethylacrylamide
SMS: Sodium methallyl sulfonate
MADAME: Dimethylaminoethyl methacrylate
IA: Itaconic acid
AA: Acrylic acid
MADAME, ClBz: Dimethylaminoethyl methacrylate, chlorinated benzyl
SMB: Sodium metabisulfite
V-50: 2,2'-Azobis(2-methylpropionamidine)dihydrochloride
PAC 18: Aluminum polyhydroxychloride (18% by weight in water)
PAC 10 HB: High Basicity polyhydroxychloride aluminum (10% by weight in water)
ACH: Aluminum chlorohydrate (23% by weight in water)

**Description of GPC-Malls Molecular Weight Characterization**

Permeable gel chromatography is a method for separating macromolecules according to their hydrodynamic volume. It is coupled to a Malls detector, making it possible to measure the diffusion of light at several angles.
The products from the examples and counter-examples are characterized as follows and in detail:

- Instrument: GPC-2
- Columns: Shodex SB 807-G, Shodex SB 807-HQ, Shodex SB 805 custom
- Method:

  * Temperature: 30°C
  * Mobile phase: 0.5 M $NaNO_3$, HEPES (pH=8), 100 ppm $NaN_3$
  * Injection: 100 µL
  * Flow rate: 0.3 mL/min
  * Detection:

    (i) Light scattering detector (MALS): Absolute molar mass

(ii) Refractometry (RI): Concentration

The viscosity is measured using a Brookfield viscometer, at 25°C with a Brookfield LV type module (for example LV1 module) and a speed of 60 rpm (rpm = rotations per minute. The Brookfield module selected depends on the viscosity of the solution measured. Those skilled in the art know and are accustomed to adjusting the module according to the viscosity of the solution to be measured, which is part of their general knowledge.

**Example 1: Preparation of water-soluble cationic aldehyde polymers $P_{CA1}$ to $P_{CA3}$**

**Water-soluble cationic aldehyde polymer 1 ($P_{CA1}$) composed of DADMAC/AM (30 mol%/70 mol%))**

Base Polymer 1 (PB1)

In a 1 liter reactor equipped with a mechanical stirrer, a thermometer, a condenser, and a nitrogen gas immersion tube, 630.4 g of water, 154.3 g of DADMAC (64% by weight in water), 0.17 g of polyethyleneimine (Polymin HM BASF at 12% by weight in water), and 0.02 g of MBA are introduced. The pH is adjusted to 2.5 with $H_2SO_4$ (96% by weight in water). The medium is heated and maintained at a temperature comprised between 79 and 81°C using a water bath. Two solutions are poured over 90 min continuously and in parallel, a first comprising 202.5 g of AM (50% by weight in water) and a second comprising 7 g of SPS (6% by weight in water). After 30 min aging, 0.6 g sodium bisulfite (40% by weight in water) is added to react any residual monomers. A further aging of 60 min is applied before cooling. The solution comprising the base polymer 1 (PB1) obtained has a pH of 5.0, an active material of 20.1% by weight and a viscosity of 4,500 cps. PB1 has a molecular weight (measured by GPC-Malls) of 610,000 g/mol.

Glyoxalation

In a 1 liter reactor equipped with a mechanical stirrer and a pH probe, 288 g of PB1 and 478 g of water are introduced. After 10 min of stirring, the pH is adjusted to 10.4 with a sodium hydroxide solution (10% by weight in water). The temperature is maintained between 20 and 22°C. 34 g of glyoxal (40% by weight in water) are added. When the desired viscosity is reached, the reaction is stopped by lowering the pH to less than 3.5 by addition of $H_2SO_4$ (96% by weight in water), we then obtain the water-soluble cationic polymer 1 ($P_{CA1}$). This pH control and viscosity monitoring make it possible to obtain a solution of $P_{CA1}$ having a viscosity of 72 cps after 57 min of reaction.

**Water-soluble cationic aldehyde polymer 2 ($P_{CA2}$) comprising DADMAC/AM (30 mol%/70 mol%)**

The water-soluble cationic aldehyde polymer 2 ($P_{CA2}$) is obtained according to the method described in patent application FR2305149 and described below:

Base Polymer 2 (PB2)

First Sequence: Prepolymer PP1

In a 1-liter reactor equipped with mechanical stirrer, thermometer, cooler and nitrogen gas immersion tube, a first fraction F1 is introduced, comprising 146.9 g water, 50.6 g AM (50% by weight in water), 77.1 g DADMAC (64% by weight in water), 1 g citric acid, 0.5 g DMA and 0.4 g SMS. The medium is heated and maintained at a temperature of between 79 and 81°C using a water bath. An addition of 0.05 g of SPS makes it possible to initiate the polymerization of the monomers (PO1) to form a first prepolymer PP1.

Second Sequence: Prepolymer PP2

When the exothermy is complete, 50 g of an SPS solution (0.33% by weight in water) is poured in 130 min (the casting of initiator lasts the time of the casting of F2, the aging of the prepolymer PP2, the casting of F3 and the first aging of the base polymer 2), and simultaneously a second fraction F2 composed of 25.5 g of water, 101.3 g of AM (50% by weight in water ), 77.1 g of DADMAC (64% by weight in water), 0.5 g of DMA and 0.19 g SMS in 50 min. Once the F2 fraction has been cast, the prepolymer PP2 is allowed to age for 10 min (PO2 polymerization to form the prepolymer PP2 takes place during the casting of the F2 fraction and during aging).

Third Sequence: Polymer Base 2 (PB2)

We then begin casting a third fraction F3, composed of 121.3 g water, 50.6 g AM (50% by weight in water), 0.01 g SMS, over 60 min. At the end of the addition of fraction F3, the polymer is allowed to age for 10 min (the polymerization PO3 to form the base polymer takes place during the casting of fraction F3 and during aging).

Once the aging is complete, 146.9 g of water are added, as well as 0.15 g of SPS. Viscosity evolution is checked every 15 min. When the desired viscosity is reached, the reaction is stopped by the addition of 2.4 g of sodium bisulfite (40% by weight in water) and 146.9 g of water. A further 60 min of aging is applied before cooling. The solution comprising the base polymer 2 (PB2) obtained has a pH of 3.5, an active material of 20% by weight and a viscosity of 3,500 cps. PB2 has a molecular weight (measured by GPC-Malls) of 2,650,000 g/mol.

Glyoxalation

In a 1 liter reactor equipped with a mechanical stirrer and a pH probe, 288 g of PB2 and 478 g of water are introduced. After 10 min of stirring, the pH is adjusted to 10.4 with a sodium hydroxide solution (10% by weight in water). The temperature is maintained between 20 and 22°C. 34 g of glyoxal (40% by weight in water) are added. When the desired viscosity is reached, the reaction is stopped by lowering the pH to less than 3.5 by adding $H_2SO_4$ (92% by weight in water), we then obtain the water-soluble cationic polymer 2 ($P_{CA2}$). This pH control and viscosity monitoring resulted in a $P_{CA2}$ solution with a viscosity of 69 cps after 51 min of reaction.

**Water-soluble cationic aldehyde polymer 3 ($P_{CA3}$) comprising DADMAC/AM (5 mol%/95 mol%)**

Base Polymer 3 (PB3)

526 g water, 33.1 g DADMAC chloride (64% by weight in water) are introduced into a 1-liter reactor equipped with a mechanical stirrer, thermometer, cooler, and nitrogen gas immersion tube. The pH is adjusted to 2.5 with $H_2SO_4$ (96% by weight in water). The medium is heated and maintained at a temperature between 79 and 81°C using a water bath. Two solutions are poured over 90 min continuously and in parallel, a first comprising 357.8 g of AM (50% by weight in water) and a second comprising 7 g of SPS (6% by weight in water). After 30 min aging, 0.6 g sodium bisulfite (40% by weight in water) is added to react any possible residual monomers. A further aging of 60 min is applied before cooling. The solution comprising the base polymer 3 (PB3) obtained has a pH of 4.9, an active ingredient of 20.05% and a viscosity of 4,050 cps. PB3 has a molecular weight obtained by GPC-Malls of 435,000 g/mol.

Glyoxalation

In a 1 liter reactor equipped with a mechanical stirrer and a pH probe, 160 g of PB3 and 620 g of water are introduced. After 10 min of stirring, the pH is adjusted to 9.3 with a sodium hydroxide solution (10% by weight in water). The temperature is maintained between 20 and 22°C. 20 g of glyoxal (40% by weight in water) are added. When the desired viscosity is reached, the reaction is stopped by lowering the pH to less than 3.5 by adding $H_2SO_4$ (96% by weight in water), we then obtain the water-soluble cationic polymer 3 ($P_{CA3}$). This pH control and viscosity monitoring resulted in a $P_{CA3}$ solution with a viscosity of 53 cps after 50 min of reaction.

**Example 2: Preparation of water-soluble amphoteric polymers PA1 to PA3 and counter-example PA-CE1**

**Water-soluble amphoteric polymer 1 (PA1) comprising MADAME/AM/IA (4.4 mol%/92.4 mol%/3.2 mol%) according to the invention**

First Sequence: Prepolymer PP1

In a 1-liter reactor equipped with mechanical stirrer, thermometer, cooler and nitrogen gas immersion tube, a first fraction F1 is introduced, comprising 122.1 g water, 75.1 g AM (50% by weight in water), 19 g MADAME, 1 g citric acid, 6 g $H_2SO_4$ (96% by weight in water), 0.03 g DMA, and 1.9 g SMS. The medium is heated and maintained at a temperature of between 79 and 81°C using a water bath. An addition of 0.05 g of SPS makes it possible to initiate the polymerization of the monomers (PO1) to form a first prepolymer PP1.

Second Sequence: Prepolymer PP2

When the exotherm is completed, 50 g of an SPS solution (0.33% by weight in water) are poured in 130 min (the

casting of initiator lasts the time of the casting of F2, the aging of the prepolymer PP2, the casting of F3 and the first aging of water-soluble amphoteric polymer PA1), and simultaneously a second fraction F2 composed of 15.2 g of water, 181.8 g of AM (50% by weight in the water), 5.1 g of IA and 1.44 g SMS, in 60 min. Once the fraction F2 has been casted, the prepolymer PP2 is allowed to age for 10 min (polymerization PO2 to form the prepolymer PP2 takes place during the casting of the fraction F2 and during aging).

Third sequence: Water-soluble amphoteric polymer PA1

We then begin casting a third fraction F3, made up of 15.2 g water, 92.6 g AM (50% by weight in water), 1.05 g IA, 0.24 g SMS, over 50 min. At the end of addition of fraction F3, the polymer is left to age for 10 min (polymerization PO3 to form the water-soluble amphoteric polymer PA1 takes place during casting of fraction F3 and during aging).

Once the aging is complete, 198.4 g of water are added, as well as 0.15 g of SPS. Viscosity evolution is checked every 15 min. When the desired viscosity is reached, the reaction is stopped by the addition of 2.4 g of sodium bisulfite (40% by weight in water) and 213.4 g of water. A further 60 min of ageing is applied before cooling, to obtain the water-soluble amphoteric polymer PA1. The solution comprising water-soluble amphoteric polymer PA1 has a pH of 3.6, an active material of 20 % by weight and a viscosity of 8,900 cps. PA1 has a molecular weight (measured by GPC-Malls) of 4,580,000 g/mol.

**Water-soluble amphoteric polymer counter-example 1 (PA-CE1) comprising MADAME/AM/IA (4.4 mol%/92.4 mol%/3.2 mol%) counter-example**

606.1 g of water, 349.7 g of AM (50% by weight in water), 19 g of MADAME, 6.2 g of IA, 0.03 g of DMA and 3.58 g of SMS are introduced into a 1-liter reactor equipped with a mechanical stirrer, a thermometer, a cooler and a nitrogen gas immersion tube. The pH is adjusted to 7 with the addition of 4 g of $H_2SO_4$ (96% by weight in water). The medium is heated and maintained at a temperature of 25°C. The reaction is initiated with the addition of 1.2 g of SPS, 1 g of MBS and 0.3 g of V-50.

When the exothermy is complete, the polymer is allowed to age for 60 min. Once the aging is complete, 2.4 g of sodium bisulfite (40% by weight in water) is added. A further aging of 60 min is applied before cooling. The pH is adjusted to 3 with the addition of 5 g of $H_2SO_4$ (96% by weight in water), water-soluble amphoteric polymer PA2 is then obtained. The solution comprising water-soluble amphoteric polymer PA-CE1 has a pH of 3, an active material of 20% by weight and a viscosity of 7,100 cps. PA-CE1 has a molecular weight (measured by GPC-Malls) of 1,350,000 g/mol.

**Water-soluble amphoteric polymer 2 (PA2) comprising DADMAC/AM/AA (5 mol%/93 mol%/2 mol%) according to the invention**

First Sequence: Prepolymer PP1

In a 1-liter reactor equipped with mechanical stirrer, thermometer, cooler and nitrogen gas immersion tube, a first F1 fraction is introduced, composed of 119, 5 g water, 76.0 g AM (50% by weight in water), 30.9 g DADMAC (64% by weight in water), 1 g citric acid, 6 g $H_2SO_4$ (96% by weight in water), 0.03 g DMA and 1.7 g SMS. The medium is heated and maintained at a temperature of between 79 and 81°C using a water bath. An addition of 0.05 g of SPS makes it possible to initiate the polymerization of the monomers (PO1) to form a first prepolymer PP1.

Second Sequence: Prepolymer PP2

When the exothermy is complete, 50 g of a solution of SPS (0.33 wt.% in water) is poured over 130 min (the initiator pouring lasts for the time it takes to pour F2, aging of the prepolymer PP2, the casting of F3 and the first aging of the water-soluble amphoteric polymer PA3), and simultaneously a second fraction F2 composed of 14.9 g water, 183.9 g AM (50% by weight in water), 2.9 g AA and 1.34 g SMS, in 60 min. Once the F2 fraction has been casted, the prepolymer PP2 is allowed to age for 10 min (the polymerization PO2 to form the prepolymer PP2 takes place during the casting of the fraction F2 and during aging).

Third Sequence: water-soluble amphoteric polymer PA2

We then begin casting a third fraction F3, made up of 14.9 g water, 93.7 g AM (50% by weight in water), 0.59 g AA, 0.21 g SMS, over 50 min. At the end of addition of fraction F3, the polymer is left to age for 10 min (the polymerization PO3 to form the water-soluble amphoteric polymer PA3 takes place during casting of fraction F3 and during aging).

Once the aging is complete, 194.1 g of water are added, as well as 0.15 g of SPS. Viscosity evolution is checked

every 15 min. When the desired viscosity is reached, the reaction is stopped by the addition of 2.4 g of sodium bisulfite (40% by weight in water) and 165.9 g of water. A further 60 min of aging is applied before cooling, to obtain the water-soluble amphoteric polymer PA2. The solution comprising water-soluble amphoteric polymer PA2 has a pH of 3.4, an active material of 20% by weight and a viscosity of 8,400 cps. PA2 has a molecular weight obtained by GPC-Malls of 4,460,000 g/mol.

**Water-soluble amphoteric polymer 3 (PA3) comprising MADAME/MADAME, ClBz/AM/IA (15 mol%/2 mol%/70 mol%/13 mol%) according to the invention**

First Sequence: Prepolymer PP1

In a 1-liter reactor equipped with a mechanical stirrer, a thermometer, a cooler and a nitrogen gas immersion tube, a first fraction F1 composed of 136,8 g water, 44.6 g AM (50% by weight in water), 49.2 g MADAME, 9.5 g MADAME ClBz, 1 g citric acid, 6 g $H_2SO_4$ (96% by weight in water), 0.03 g DMA and 1.1 g SMS. The medium is heated and maintained at a temperature of between 79 and 81°C using a water bath. An addition of 0.05 g of SPS makes it possible to initiate the polymerization of the monomers (PO1) to form a first prepolymer PP1.

Second sequence: Prepolymer PP2

When the exothermy is complete, 50 g of a solution of SPS (0.33 wt.% in water) is poured over 130 min (the initiator pouring lasts for the time it takes to pour F2, aging of the prepolymer PP2, the casting of F3 and the first aging of the water-soluble amphoteric polymer PA4), and simultaneously a second fraction F2 composed of 17.1 g water, 107.8 g AM (50% by weight in water), 29.3 g IA and 0.8 g SMS, in 60 min. Once the fraction F2 has been casted, the prepolymer PP2 is allowed to age for 10 min (the polymerization PO2 to form the prepolymer PP2 takes place during the casting of the fraction F2 and during aging).

Third Sequence: water-soluble amphoteric polymer PA3

We then begin pouring a third fraction F3, composed of 17.1 g of water, 54.9 g of AM (50% by weight in water), 6.0 g of AI (100% by weight in water), 0.1 g of SMS, in 50 min. At the end of addition of fraction F3, the polymer is left to age for 10 min (the polymerization PO3 to form the water-soluble amphoteric polymer PA3 takes place during casting of fraction F3 and during aging).

Once the aging is complete, 222.3 g of water are added, as well as 0.15 g of SPS. Viscosity evolution is checked every 15 min. When the desired viscosity is reached, the reaction is stopped by the addition of 2.4 g of sodium bisulfite (40% by weight in water) and 189.8 g of water. A further 60 min of ageing is applied before cooling, to obtain the water-soluble amphoteric polymer PA4. The solution comprising water-soluble amphoteric polymer PA3 has a pH of 3.5, an active material of 20% and a viscosity of 9,100 cps. PA3 has a molecular weight obtained by GPC-Malls of 4,650,000 g/mol.

**Example 3: Preparation of mixtures M-1 to M-7 according to the invention and counter-examples M-CE1 to M-CE2:**

Water-soluble cationic polymers $P_{CA1}$ to $P_{CA3}$ are mixed with an aluminum salt to form the mixtures according to the invention M-1 to M-7 and counter-examples M-CE1/CE2 in ratios as presented in the table 1 below:

**Table 1 - Composition of the mixtures according to the invention M-1 to M-7 and counter-examples M-CE1/CE2. CE = counter-example**

| Mixture | Polymer | Aluminum Salt | Ratio by weight of aluminum salt/$P_{CA}$ |
|---|---|---|---|
| **M-CE1** | $P_{CA1}$ | PAC 10 HB | 10/90 |
| **M-CE2** | $P_{CA1}$ | PAC 10 HB | 75/25 |
| **M-1** | $P_{CA1}$ | PAC 10 HB | 60/40 |
| **M-2** | $P_{CA1}$ | PAC 10 HB | 33/67 |
| **M-3** | $P_{CA1}$ | PAC 10 HB | 25/75 |
| **M-4** | $P_{CA1}$ | PAC 18 | 33/67 |
| **M-5** | $P_{CA1}$ | ACH | 33/67 |

(continued)

| Mixture | Polymer | Aluminum Salt | Ratio by weight of aluminum salt/$P_{CA}$ |
|---|---|---|---|
| **M-6** | $P_{CA2}$ | PAC 10 HB | 33/67 |
| **M-7** | $P_{CA3}$ | PAC 10 HB | 33/67 |

**Example 4: Application tests**

The wet paste used in all the application examples is obtained by disintegration of dry paste in order to obtain a final aqueous concentration of 1% by mass of cellulosic fibers and fillers in water. It is a pH-neutral paste made from 100% recycled cardboard fibers.

**Vacuum dewatering performances assessment (DDA)**

The DDA (Dynamic Drainage Analyzer) makes it possible to automatically determine the time (in seconds) necessary to drain a fibrous suspension on a fabric under vacuum. The polymers are added to the wet paste (0.6 liters of dough at 1.0% by weight) in the DDA cylinder with stirring at 1000 revolutions per minute:

T= 0 seconds: stirring of the paste
T= 10 seconds: addition of the water-soluble cationic aldehyde polymer mixture and/or the aluminum salt, or of the water-soluble cationic aldehyde polymer and the aluminum salt separately
T= 20 seconds: addition of the water-soluble amphoteric polymer
T= 30 seconds: stop of stirring and draining under vacuum at 200 mBar for 60 seconds.

The pressure under the fabric is recorded as a function of time. When all the water is evacuated from the fibrous mat, the air passes through it causing a break in slope to appear on the curve representing the pressure under the fabric as a function of time. The time, expressed in seconds, recorded at this break in slope corresponds to the dewatering time. The shorter the delay, the better the vacuum dewatering.

**Performances in dry strength application (Dry Strength Resin (DSR)), weight at 80 $gm^{-2}$**

The necessary quantity of paste is taken so as to ultimately obtain a sheet with a weight of 80 $gm^{-2}$.

The wet paste is introduced into the vat of the dynamic former and kept under stirring. The different components of the system are injected into this paste according to the predefined sequence. A contact time of 30 to 45 seconds is generally observed between each addition of polymers.

Paper sheets are made with an automatic dynamic shaper: a blotter and the forming fabric are placed in the bowl of the dynamic shaper before starting the bowl rotation at 1000 $rpm^{-1}$ and building the water wall. The treated paste is spread over the water wall to form the fibrous mat on the forming fabric.

Once the water is drained, the fibrous mat is collected, pressed under a press delivering 4 bars, then dried at 117°C. The sheet obtained is conditioned overnight in a room with controlled humidity and temperature (50% relative humidity and 23°C). The dry strength properties of all sheets obtained by this procedure are then measured.

The burst is measured with a Messmer Buchel M 405 burstometer according to the TAPPI T403 om-02 standard. The result is expressed in kPa. The burst index, expressed in $kPa.m^2/g$, is determined by dividing this value by the weight of the sheet tested. The results are expressed in Table 3 as a percentage improvement in the bursting index compared to a blank (no additive).

The dry breaking length (DBL) is measured in the machine direction using a Testometric AX tensile tester in accordance with TAPPI standard T494 om-01. The result is expressed in km. The results are expressed in Table 3 as a percentage improvement over a blank (no additive).

Different combinations were carried out in order to demonstrate the benefits of the invention and are summarized in Table 2. When the aluminum salt and the water-soluble cationic aldehyde polymer are added separately and not via mixture M, they are added in parallel (example **CE3).** In test **CE9,** polymer PA1 is added before the mixture M-2. In test **CE10,** the polymer PA1 and the mixture M-2 are added in parallel.

**Table 2 - Combinations Made. E = Invention and CE = Counter-Example**

| Examples | Mixtures | Aluminum salt | Water-Soluble Cationic Aldehyde Polymer | Water-Soluble Amphoteric Polymer |
|---|---|---|---|---|
| **CE1** | | PAC 10 HB | | PA1 |
| **CE2** | | | $P_{CA1}$ | PA1 |
| **CE3** | | PAC 10 HB | $P_{CA1}$ | PA1 |
| **E1** | M-1 | | | PA1 |
| **E2** | M-2 | | | PA1 |
| **E3** | M-3 | | | PA1 |
| **CE4** | M-CE1 | | | PA1 |
| **CE5** | M-CE2 | | | PA1 |
| **E5** | M-4 | | | PA1 |
| **E6** | M-5 | | | PA1 |
| **E7** | M-6 | | | PA1 |
| **CE6** | M-2 | | | PA-CE1 |
| **CE7** | M-2 | | | |
| **CE8** | | | | PA1 |
| **CE9** | M-2 | | | PA1 |
| **CE10** | M-2 | | | PA1 |
| **CE11** | | | $P_{CA1}$ | |
| **E8** | M-7 | | | PA1 |
| **E9** | M-2 | | | PA2 |
| **E10** | M-2 | | | PA3 |

The applicative performances of the various examples are summarized in Table 3.

In test CE4, the mixture M-CE2 prepared was unstable and therefore did not enable application performance to be measured.

**Table 3 - Application Performance. E = Invention and CE = Counter-Example**

| Example | % DDA | % DBL | % burst |
|---|---|---|---|
| **CE1** | 39.8 | 21.5 | 26.2 |
| **CE2** | 16.4 | 20.3 | 28.2 |
| **CE3** | 55.4 | 23.7 | 32.6 |
| **E1** | 59.6 | 28.1 | 39.9 |
| **E2** | 64.5 | 33.1 | 45.1 |
| **E3** | 60.5 | 32 | 40 |
| **CE4** | - | - | - |
| **CE5** | 54.9 | 21.7 | 27.6 |
| **E5** | 63.7 | 32.9 | 44.9 |
| **E6** | 64.8 | 33.3 | 45.4 |
| **E7** | 65.2 | 34 | 45.9 |
| **CE6** | 33.1 | 22.4 | 29.1 |
| **CE7** | 32.4 | 15.1 | 22.0 |

(continued)

| Example | % DDA | % DBL | % burst |
|---|---|---|---|
| **CE8** | 1 | 14.1 | 20.1 |
| **CE9** | 25.8 | 18.4 | 20.9 |
| **CE10** | 22.6 | 15.8 | 18.7 |
| **CE11** | 40.5 | 17.5 | 25.8 |
| **E8** | 62.1 | 32.8 | 42.0 |
| **E9** | 65.1 | 32.7 | 44.3 |
| **E10** | 63.6 | 31.8 | 41.7 |

These results demonstrate that the combination between **(1)** a mixture M comprising an aluminum salt and a water-soluble cationic aldehyde polymer **(2)** in a precise ratio, and **(3)** a water-soluble amphoteric polymer obtained according to a particular method, added **(4 )** in sequence with a fibrous cellulose suspension makes it possible to improve the physical properties of paper or cardboard.

## Claims

**1.** A method of manufacturing a sheet of paper or cardboard comprising the addition, in sequence, to a fibrous suspension of at least:

1) a mixture M comprising at least:

a) an aluminum salt;
b) a water-soluble cationic aldehyde polymer;

the aluminum salt and the water-soluble cationic aldehyde polymer having a weight ratio of between 60:40 and 20:80;
2) a water-soluble amphoteric polymer PA comprising at least:

a) a hydrophilic cationic monomer $A_{PHA}$ ;
b) a hydrophilic anionic monomer $B_{PHA}$;
c) a hydrophilic non-ionic monomer $C_{PHA}$;
d) a structuring system comprising at least:

(i) a compound I, different from the hydrophilic anionic monomer $B_{PHA}$, selected from: allylsulfonic acid, methallylsulfonic acid, allyl disulfonic acid, methallyl disulfonic acid, the salts and mixtures thereof;
(ii) a compound II of formula (2):

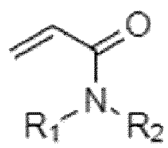

Formula (2)

$R_1$ and $R_2$ being, independently of each other, a hydrogen atom, a methyl group, an ethyl group, an isopropyl group or a $CH_2$-OH group;
$R_1$ and $R_2$ not being both a hydrogen atom;
the water-soluble amphoteric polymer PA being obtained according to the following steps:

A) formation of a solution (S1) comprising at least a first fraction (F1) comprising (1) at least one monomer selected from the monomers $A_{PHA}$, $B_{PHA}$, and $C_{PHA}$ and/or (2) at least one compound

selected from compounds I and II;
B) polymerization 1 (PO1) of fraction F1 to form a solution of a first prepolymer PP1;
C) addition, to the solution comprising PP1, of a second fraction (F2) comprising (1) at least one monomer selected from the monomers $A_{PHA}$, $B_{PHA}$ and $C_{PHA}$ and/or (2) at least one compound selected from compounds I and II;
D) polymerization 2 (PO2) of fraction F2 on PP1 to form a solution of a second prepolymer PP2;
E) addition, to the solution comprising PP2, of a third fraction (F3) comprising (1) at least one monomer selected from the monomers $A_{PHA}$, $B_{PHA}$ and $C_{PHA}$ and/or (2) at least one compound selected from compounds I and II;
F) polymerization 3 (PO3) of fraction F3 on PP2 to form a solution comprising the water-soluble amphoteric polymer PA;

at least one of the fractions F1, F2 or F3 comprising at least one monomer $A_{PHA}$,
at least one of the fractions F1, F2 or F3 comprising at least one monomer $B_{PHA}$,
at least one of the fractions F1, F2 or F3 comprising at least one monomer $C_{PHA}$,
at least one of the fractions F1, F2 or F3 comprising at least one compound I and
at least one of the fractions F1, F2 or F3 comprising at least one compound II.

2. The method according to claim 1, **characterized in that** mixture M is added to a thick stock and **in that** water-soluble amphoteric polymer PA is added to a thin stock.

3. The method according to any of claims 1 or 2, **characterized in that** mixture M and the water-soluble amphoteric polymer PA have a weight ratio of between 1:50 and 50:1.

4. The method according to any of the preceding claims, **characterized in that** the aluminum salt is a polyaluminum chloride or an aluminum chlorohydrate.

5. The method according to any of the preceding claims, **characterized in that** mixture M comprises a quantity of water-soluble cationic aldehyde polymer greater than the quantity of the aluminum salt.

6. The method according to any of the preceding claims, **characterized in that** compound II is selected from: N,N-dimethylacrylamide, N,N-diethylacrylamide, N-isopropylacrylamide, N-methylolacrylamide and mixtures thereof.

7. The method according to any of the preceding claims, **characterized in that** the monomers $A_{PHA}$, $B_{PHA}$ and $C_{PHA}$ represent 100 mol% of the monomers of water-soluble amphoteric polymer PA.

8. The method according to any of the preceding claims, **characterized in that** the water-soluble amphoteric polymer PA has a molar quantity of cationic monomer $A_{PHA}$ greater than the molar quantity of anionic monomer $B_{PHA}$.

9. The method according to any of the preceding claims, **characterized in that** at least one of the fractions F1, F2 or F3 comprises (1) at least one monomer selected from the monomers $A_{PHA}$, $B_{PHA}$ and $C_{PHA}$ and (2) at least a compound selected from compounds I and II.

10. The method according to any of the preceding claims, **characterized in that** at least one of the fractions F1, F2 or F3 comprises (1) at least one monomer selected from the monomers $A_{PHA}$, $B_{PHA}$ and $C_{PHA}$ and (2) at least a compound selected from compounds I and II.

11. The method according to any of the preceding claims, **characterized in that** the monomers $A_{PHA}$ and $B_{PHA}$ are added in different fractions.

12. The method according to preceding claim 11, **characterized in that**:

(i) fraction F1 comprises at least 50 mol% of monomers $A_{PHA}$ with regard to the total amount of monomer $A_{PHA}$ in the water-soluble amphoteric polymer PA, or at least 50 mol% of monomers $B_{PHA}$ with regard tothe total amount of monomer $B_{PHA}$ in the water-soluble amphoteric polymer PA, and;
(ii) fraction F3 comprises at least 50 mol% of monomers $A_{PHA}$, with regard to the total amount of monomer $A_{PHA}$ in the water-soluble amphoteric polymer PA, or at least 50 mol% of monomers $B_{PHA}$, with regard to the total amount of monomers $B_{PHA}$ in the water-soluble amphoteric polymer PA.

## Patentansprüche

**1.** Verfahren zur Herstellung eines Papier- oder Kartonbogens, bei dem mindestens Folgendes zu einer Fasersuspension nacheinander hinzugegeben wird:

1) ein Gemisch M, das mindestens Folgendes umfasst:

a) ein Aluminiumsalz;
b) ein wasserlösliches kationisches Aldehydpolymer;

wobei das Aluminiumsalz und das wasserlösliche kationische Aldehydpolymer ein Gewicht im Verhältnis von 60:40 bis 20:80 aufweisen;
2) ein wasserlösliches amphoteres Polymer PA, das mindestens Folgendes umfasst:

a) ein hydrophiles kationisches Monomer $A_{PHA}$;
b) ein hydrophiles anionisches Monomer $B_{PHA}$;
c) ein hydrophiles nichtionisches Monomer $C_{PHA}$;
d) ein Strukturierungssystem, das mindestens Folgendes umfasst:

(i) eine Verbindung I, die sich von dem hydrophilen anionischen Monomer $B_{PHA}$ unterscheidet und ausgewählt ist aus:
Allylsulfonsäure, Methallylsulfonsäure, Allyldisulfonsäure, Methallyldisulfon-säure, deren Salzen und Gemischen;
(ii) eine Verbindung II mit folgender Formel (2):

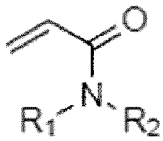
Formel (2)

wobei R1 und R2 unabhängig voneinander ein Wasserstoffatom, eine Methylgruppe, eine Ethylgruppe, eine Isopropylgruppe oder eine $CH_2$-OH-Gruppe sind;
$R_1$ und $R_2$ nicht beide ein Wasserstoffatom sind;
wobei das wasserlösliche amphotere Polymer PA in folgenden Schritten erhalten wird:

A) Bildung einer Lösung (S1), die mindestens eine erste Fraktion (F1) umfasst, die (1) mindestens ein Monomer, ausgewählt aus den Monomeren $A_{PHA}$, $B_{PHA}$ und $C_{PHA}$, und/oder (2) mindestens eine Verbindung, ausgewählt aus den Verbindungen I und II, umfasst;
B) Polymerisation 1 (PO1) der Fraktion F1 zur Bildung einer Lösung eines ersten Prepolymers PP1;
C) Zugabe einer zweiten Fraktion (F2), die (1) mindestens ein Monomer, ausgewählt aus den Monomeren $A_{PHA}$, $B_{PHA}$ und $C_{PHA}$, und/oder (2) mindestens eine Verbindung, ausgewählt aus den Verbindungen I und II, zu der Lösung, die PP1 enthält.
D) Polymerisation 2 (PO2) der Fraktion F2 auf PP1 zur Bildung einer Lösung eines zweiten Prepolymers PP2;
E) Zugabe einer dritten Fraktion (F3), die (1) mindestens ein Monomer, ausgewählt aus den Monomeren $A_{PHA}$, $B_{PHA}$ und $C_{PHA}$, und/oder (2) mindestens eine Verbindung, ausgewählt aus den Verbindungen I und II, zu der Lösung, die PP2 enthält;
F) Polymerisation 3 (PO3) der Fraktion F3 auf PP2 zur Bildung einer Lösung, die das wasserlösliche amphotere Polymer PA enthält; wobei

mindestens eine der Fraktionen F1, F2 oder F3 mindestens ein Monomer $A_{PHA}$ enthält,
mindestens eine der Fraktionen F1, F2 oder F3 mindestens ein Monomer $B_{PHA}$ enthält,
mindestens eine der Fraktionen F1, F2 oder F3 mindestens ein Monomer $C_{PHA}$ enthält,
mindestens eine der Fraktionen F1, F2 oder F3 mindestens eine Verbindung I enthält und
mindestens eine der Fraktionen F1, F2 oder F3 mindestens eine Verbindung II enthält.

2. Verfahren nach Anspruch 1, **dadurch gekennzeichnet, dass** das Gemisch M zu einer dicken Charge hinzugegeben wird und dass das wasserlösliche amphotere Polymer PA zu einer dünnen Charge hinzugegeben wird.

3. Verfahren nach einem der Ansprüche 1 oder 2, **dadurch gekennzeichnet, dass** das Gemisch M und das wasserlösliche amphotere Polymer PA ein Gewicht im Verhältnis von 1:50 bis 50:1 aufweisen.

4. Verfahren nach einem der vorstehenden Ansprüche, **dadurch gekennzeichnet, dass** das Aluminiumsalz ein Polyaluminiumchlorid oder ein Aluminiumchlorhydrat ist.

5. Verfahren nach einem der vorstehenden Ansprüche, **dadurch gekennzeichnet, dass** die Gemisch M eine Menge eines wasserlöslichen kationischen Aldehydpolymers enthält, die größer ist als die Menge des Aluminiumsalzes.

6. Verfahren nach einem der vorstehenden Ansprüche, **dadurch gekennzeichnet, dass** die Verbindung II ausgewählt ist aus: N,N-Dimethylacrylamid, N,N-Diethylacrylamid, N-Isopropylacrylamid, N-Methylolacrylamid und deren Gemischen.

7. Verfahren nach einem der vorstehenden Ansprüche, **dadurch gekennzeichnet, dass** die Monomere $A_{PHA}$, $B_{PHA}$ und $C_{PHA}$ 100 Mol-% der Monomere des wasserlöslichen amphoteren Polymers PA ausmachen.

8. Verfahren nach einem der vorstehenden Ansprüche, **dadurch gekennzeichnet, dass** das wasserlösliche amphotere Polymer PA eine Stoffmenge des kationischen Monomers APHA aufweist, die größer ist als die Stoffmenge des anionischen Monomers BPHA.

9. Verfahren nach einem der vorstehenden Ansprüche, **dadurch gekennzeichnet, dass** mindestens eine der Fraktionen F1, F2 oder F3 (1) mindestens ein Monomer, ausgewählt aus den Monomeren $A_{PHA}$, $B_{PHA}$ und $C_{PHA}$, und (2) mindestens eine Verbindung, ausgewählt aus den Verbindungen I und II, umfasst.

10. Verfahren nach einem der vorstehenden Ansprüche, **dadurch gekennzeichnet, dass** mindestens eine der Fraktionen F1, F2 oder F3 (1) mindestens ein Monomer, ausgewählt aus den Monomeren $A_{PHA}$, $B_{PHA}$ und $C_{PHA}$, und (2) mindestens eine Verbindung, ausgewählt aus den Verbindungen I und II, umfasst.

11. Verfahren nach einem der vorstehenden Ansprüche, **dadurch gekennzeichnet, dass** die Monomere $A_{PHA}$ und $B_{PHA}$ in unterschiedlichen Fraktionen zugegeben werden.

12. Verfahren nach dem vorstehenden Anspruch 11, **dadurch gekennzeichnet, dass**:

    (i) die Fraktion F1 mindestens 50 Mol-% der Monomere $A_{PHA}$, bezogen auf die Gesamtmenge an Monomer $A_{PHA}$ in dem wasserlöslichen amphoteren Polymer PA, oder mindestens 50 Mol-% der Monomere $B_{PHA}$, bezogen auf die Gesamtmenge an Monomer $B_{PHA}$ in dem wasserlöslichen amphoteren Polymer PA, umfasst, und
    (ii) die Fraktion F3 mindestens 50 Mol-% der Monomere $A_{PHA}$, bezogen auf die Gesamtmenge an Monomer $A_{PHA}$ in dem wasserlöslichen amphoteren Polymer PA, oder mindestens 50 Mol-% der Monomere $B_{PHA}$, bezogen auf die Gesamtmenge an Monomeren $B_{PHA}$ in dem wasserlöslichen amphoteren Polymer PA, umfasst.

## Revendications

1. Procédé de fabrication d'une feuille de papier ou de carton comprenant l'addition, en séquence, à une suspension fibreuse d'au moins :

    1) un mélange M comprenant au moins :

        a) un sel d'aluminium ;
        b) un polymère hydrosoluble cationique aldéhydé ;

    le sel d'aluminium et le polymère hydrosoluble cationique ayant un ratio en poids compris entre 60:40 et 20:80 ;
    2) un polymère hydrosoluble amphotérique PA comprenant au moins:

        a) un monomère hydrophile cationique $A_{PHA}$ ;

b) un monomère hydrophile anionique $B_{PHA}$ ;
c) un monomère hydrophile non-ionique $C_{PHA}$ ;
d) un système de structuration comprenant au moins:

(i) un composé I, différent du monomère hydrophile anionique $B_{PHA}$, choisi parmi : l'acide allylsulfonique, l'acide méthallylsulfonique, l'acide allyl disulfonique, l'acide méthallyl disulfonique, leurs sels et leurs mélanges ;
(ii) un composé II de formule (2) :

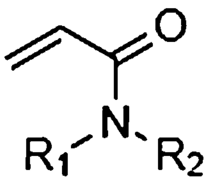

Formule (2)

$R_1$ et $R_2$ étant, indépendamment l'un de l'autre, un atome d'hydrogène, un groupe méthyle, un groupe éthyle, un groupe isopropyle ou un groupe $CH_2$-OH ;
$R_1$ et $R_2$ n'étant pas tous deux un atome d'hydrogène ;
le polymère hydrosoluble amphotérique PA étant obtenu selon les étapes suivantes :

A) formation d'une solution (S1) comprenant au moins une première fraction (F1) comprenant (1) au moins un monomère choisi parmi les monomères $A_{PHA}$, $B_{PHA}$ et $C_{PHA}$ et/ou (2) au moins un composé choisi parmi les composés I et II ;
B) polymérisation 1 (PO1) de la fraction F1 pour former une solution d'un premier prépolymère PP1;
C) ajout, à la solution comprenant PP1, d'une deuxième fraction (F2) comprenant (1) au moins un monomère choisi parmi les monomères $A_{PHA}$, $B_{PHA}$ et $C_{PHA}$ et/ou (2) au moins un composé choisi parmi les composés I et II ;
D) polymérisation 2 (PO2) de la fraction F2 sur PP1 pour former une solution d'un deuxième prépolymère PP2 ;
E) ajout, à la solution comprenant PP2, d'une troisième fraction (F3) comprenant (1) au moins un monomère choisi parmi les monomères $A_{PHA}$, $B_{PHA}$ et $C_{PHA}$ et/ou (2) au moins un composé choisi parmi les composés I et II ;
F) polymérisation 3 (PO3) de la fraction F3 sur PP2 pour former une solution comprenant le polymère hydrosoluble amphotérique PA ;

au moins une des fractions F1, F2 ou F3 comprenant au moins un monomère $A_{PHA}$,
au moins une des fractions F1, F2 ou F3 comprenant au moins un monomère $B_{PHA}$,
au moins une des fractions F1, F2 ou F3 comprenant au moins un monomère $C_{PHA}$,
au moins une des fractions F1, F2 ou F3 comprenant au moins un composé I, et
au moins une des fractions F1, F2 ou F3 comprenant au moins un composé II.

**2.** Procédé selon la revendication 1, **caractérisé en ce que** le mélange M est ajouté à une pâte épaisse et **en ce que** le polymère hydrosoluble amphotérique PA est ajouté à une pâte diluée.

**3.** Procédé selon l'une des revendications 1 ou 2, **caractérisé en ce que** le mélange M et le polymère hydrosoluble amphotérique PA présentent un ratio en poids compris entre 1:50 et 50:1.

**4.** Procédé selon l'une des revendications précédentes, **caractérisé en ce que** le sel d'aluminium est un polychlorure d'aluminium ou un chlorhydrate d'aluminium.

**5.** Procédé selon l'une des revendications précédentes, **caractérisé en ce que** le mélange M comprend une quantité de polymère hydrosoluble cationique aldéhydé supérieure à la quantité de sel d'aluminium.

6. Procédé selon l'une des revendications précédentes, **caractérisé en ce que** le composé II est choisi parmi : le N,N-diméthylacrylamide, le N,N-diéthylacrylamide, le N-isopropylacrylamide, le N-méthylolacrylamide et leurs mélanges.

7. Procédé selon l'une des revendications précédentes, **caractérisé en ce que** les monomères $A_{PHA}$, $B_{PHA}$ et $C_{PHA}$ représentent 100 % molaire des monomères du polymère hydrosoluble amphotérique PA.

8. Procédé selon l'une des revendications précédentes, **caractérisé en ce que** le polymère hydrosoluble amphotérique PA présente une quantité molaire de monomère cationique $A_{PHA}$ supérieure à la quantité molaire de monomère anionique $B_{PHA}$.

9. Procédé selon l'une des revendications précédentes, **caractérisé en ce qu'**au moins une des fractions F1, F2 ou F3 comprend (1) au moins un monomère choisi parmi les monomères $A_{PHA}$, $B_{PHA}$ et $C_{PHA}$ et (2) au moins un composé choisi parmi les composés I et II.

10. Procédé selon l'une des revendications précédentes, **caractérisé en ce que** les trois fractions F1, F2 et F3 comprennent (1) au moins un monomère choisi parmi les monomères $A_{PHA}$, $B_{PHA}$ et $C_{PHA}$ et (2) au moins un composé choisi parmi les composés I et II.

11. Procédé selon l'une des revendications précédentes, **caractérisé en ce que** les monomères $A_{PHA}$ et $B_{PHA}$ sont ajoutés dans des fractions différentes.

12. Procédé selon la revendication précédente 11, **caractérisé en ce que** :

(i) la fraction F1 comprend au moins 50 mol% des monomères $A_{PHA}$ par rapport à la quantité total de monomère $A_{PHA}$ dans le polymère hydrosoluble amphotérique PA, ou au moins 50 mol% des monomères $B_{PHA}$ par rapport à la quantité total de monomère $B_{PHA}$ dans le polymère hydrosoluble amphotérique PA, et ;
(ii) la fraction F3 comprend au moins 50 mol% des monomères $A_{PHA}$ par rapport à la quantité total de monomère $A_{PHA}$ dans le polymère hydrosoluble amphotérique PA, ou au moins 50 mol% des monomères $B_{PHA}$ par rapport à la quantité total de monomère $B_{PHA}$ dans le polymère hydrosoluble amphotérique PA.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- FR 2880901 B1
- EP 3464721 A1
- FR 3048436 A1
- US 20050272889 A1
- FR 2206322
- WO 2021123599 A
- US 20110056640 A
- FR 2987375
- FR 2305149


### Non-patent literature cited in the description


- **G.A. SMOOK**. Handbook for Pulp & Paper Technologists